(19) Europäisches Patentamt
European Patent Office
Office européen des brevets

(11) Veröffentlichungsnummer: **0 224 224 B1**

# (12) EUROPÄISCHE PATENTSCHRIFT

(45) Veröffentlichungstag der Patentschrift: **12.02.92**

(51) Int. Cl.⁵: **C09B 67/22**, D06P 1/38, C09B 67/24, D06P 3/66

(21) Anmeldenummer: **86116213.9**

(22) Anmeldetag: **22.11.86**

(54) **Mischungen wasserlöslicher faserreaktiver Farbstoffe und ihre Verwendung zum Färben.**

(30) Priorität: **28.11.85 DE 3542025**

(43) Veröffentlichungstag der Anmeldung:
**03.06.87 Patentblatt 87/23**

(45) Bekanntmachung des Hinweises auf die Patenterteilung:
**12.02.92 Patentblatt 92/07**

(84) Benannte Vertragsstaaten:
**BE CH DE FR GB IT LI**

(56) Entgegenhaltungen:
**EP-A- 0 168 703**
**GB-A- 2 057 480**

(73) Patentinhaber: **HOECHST AKTIENGESELLSCHAFT**
**Postfach 80 03 20**
**W-6230 Frankturt am Main 80(DE)**

(72) Erfinder: **Hähnke, Manfred, Dr.**
**Behringstrasse 13**
**W-6233 Kelkheim (Taunus)(DE)**
Erfinder: **Segal, Marcos, Dr.**
**Av. Jorge Bei Maluf 2073/2173**
**BR-08600-Suzano-SP(BR)**

EP 0 224 224 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus den europäischen Patentanmeldungs-Veröffentlichungen Nrs. 0 101 665, 0 141 996 und 0 144 580 sind wasserlösliche Dioxazin-Farbstoffe bekannt, die eine β-Sulfatoethylsulfonyl-, Vinylsulfonyl-, Monofluortriazinyl- oder Chlor-difluor-pyrimidyl-Reaktivgruppe besitzen. Diese Farbstoffe zeichnen sich - insbesondere unter den zur Fixierung von faserreaktiven Farbstoffen erforderlichen alkalischen Bedingungen - durch eine hohe Affinität und Reaktivität gegenüber der Cellulosefaser aus, weswegen beim Färben nach dem Ausziehverfahren das Aufziehen der Farbstoffe auf die Faser und insbesondere deren Fixierung auf der Faser derart rasch erfolgen, daß die resultierenden Färbungen eine nicht immer ausreichende praxisgerechte Egalität aufweisen. Ein weiterer Nachteil der Farbstoffe aus der europäischen Patentanmeldungs-Veröffentlichung Nr. 0 141 996 liegt darin, daß deren Färbungen auf Cellulosefasermaterialien, wie Baumwolle, nur eine mäßige bis schlechte Beständigkeit gegen haushaltsübliche perborathaltige Waschmittel besitzen.

Weiterhin sind beispielsweise aus dem Beispiel 11 der britischen Patentanmeldungs-Veröffentlichung Nr. 2 029 850, dem Beispiel 1 der deutschen Offenlegungsschrift 3 029 699, dem Beispiel 1 der deutschen Offenlegungsschrift 3 113 989 und dem Beispiel 1 der US-Patentschrift 4 412 948 sowie aus dem Colour Index als C.I. Reactive Black 5 faserreaktive marineblaue Disazofarbstoffe bekannt, deren Färbungen auf Cellulosefasermaterialien lediglich eine mäßige bis schlechte Lichtechtheit besitzen.

Es wurde nun gefunden, daS die Nachteile dieser Farbstoffe im wesentlichen durch ein Gemisch von faserreaktiven Farbstoffen aus einem Farbstoff der nachstehenden allgemeinen Formeln(I) und einem Farbstoff der nachstehenden allgemeinen Formeln(II) behoben werden. Es wurde gefunden, daß solche Farbstoffgemische bzw. die gleichzeitige Verwendung von Farbstoffen der Formeln (I) und (II) auf carbonamidgruppenhaltigen und insbesondere hydroxygruppenhaltigen Fasermaterialien in überraschender Weise sehr egale Färbungen mit noch ausreichend guten Lichtechtheiten liefern. Es wurde insbesondere gefunden, daß faserreaktive Dioxazinfarbstoffe mit der nachstehenden Konstitution der allgemeinen Formeln (Ia) und (Ib) nicht mehr die färberischen Nachteile zeigen, wenn sie in Mischung mit oder zusammen mit anderen bestimmten marineblauen Farbstoffen der nachfolgenden allgemeinen Formeln (IIa), (IIb), (IIc) oder (IId), oder Mischungen dieser Farbstoffe (II), eingesetzt werden.

Die vorliegende Erfindung betrifft somit Farbstoffzusammensetzungen in fester oder gelöster Form oder in der färberischen Anwendung, bzw. Färbepräparationen solcher Farbstoffzusammensetzungen, die einen oder mehrere Dioxazinfarbstoffe entsprechend den nachstehend genannten und definierten allgemeinen Formeln (Ia) und (Ib) und einen oder mehrere Disazofarbstoffe entsprechend den nachstehend genannten und definierten allgemeinen Formeln (IIa), (IIb), (IIc) und (IId) enthalten oder im wesentlichen daraus bestehen.

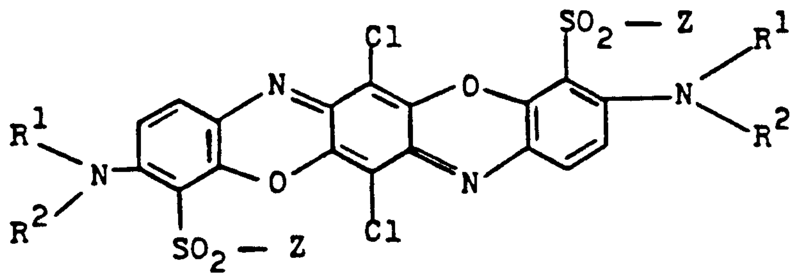

(Ia)

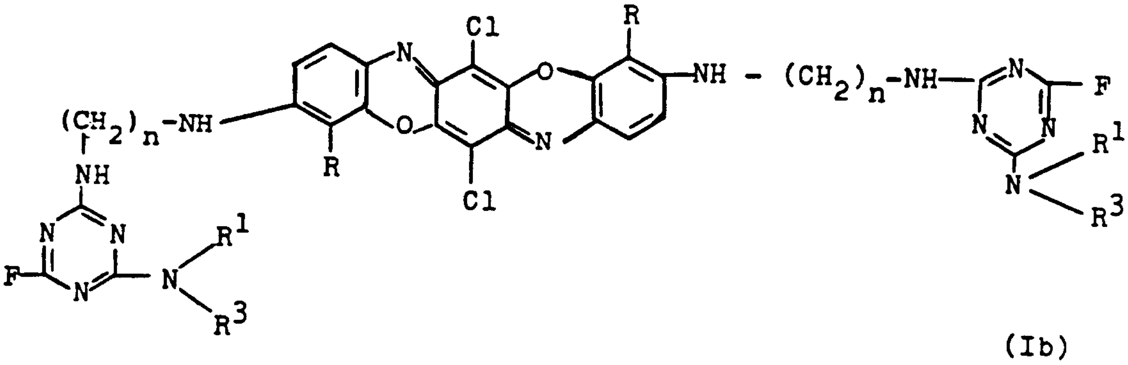

(Ib)

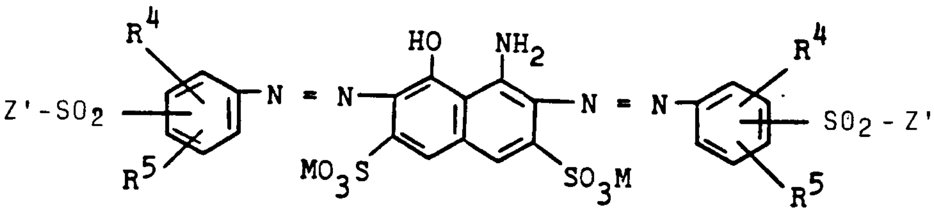

(IIa)

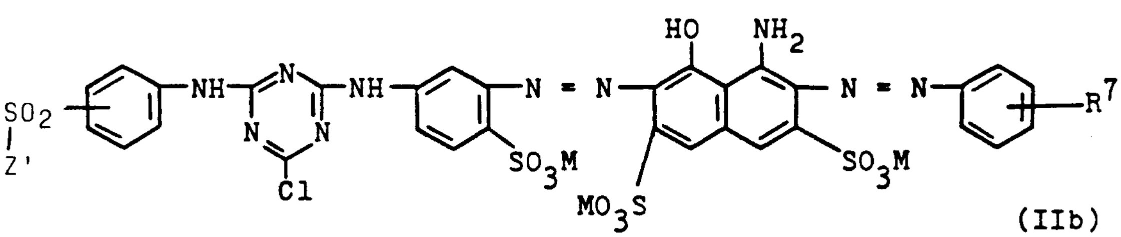

(IIb)

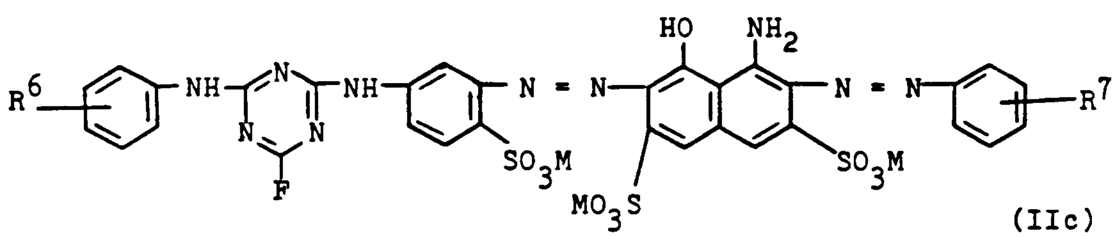

(IIc)

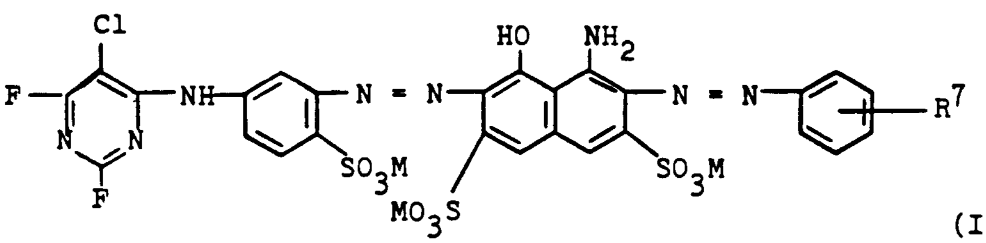

(IId)

In diesen Formeln bedeuten:

- Z ist die Vinylgruppe oder die $\beta$-Sulfatoethyl-Gruppe;
- Z' ist die Vinylgruppe oder die $\beta$-Sulfatoethyl-Gruppe;
- R steht für die Sulfogruppe oder eine Sulfonamidgruppe der allgemeinen Formel (III)

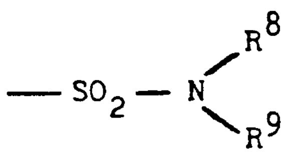

(III)

in welcher

$R^8$ ein Wasserstoffatom oder eine gegebenenfalls substituierte Alkylgruppe von 1 bis 4 C-Atomen, wie beispielsweise eine durch eine Sulfo-, Sulfato-, Phosphato- oder Carboxygruppe substituierte Alkylgruppe von 1 bis 4 C-Atomen, ist und

$R^9$ eine Alkylgruppe von 1 bis 4 C-Atomen, die durch 1 oder 2 Substituenten aus der Gruppe Sulfato, Sulfo, Carboxy und Phosphato substituiert sein kann, bedeutet oder eine Arylgruppe, wie eine Phenyl- oder Naphthylgruppe, ist, die durch 1, 2 oder 3 Substituenten aus der Gruppe Sulfo und Carboxy substituiert sein kann, oder eine durch eine Arylgruppe substituierte Alkylgruppe von 1 bis 4 C-Atomen ist, die im Arylrest, wie dem Phenyl- oder einem Naphthylrest, durch 1, 2 oder 3 Substituenten aus der Gruppe Sulfo und Carboxy substituiert sein kann;

$R^1$ ist ein Wasserstoffatom oder eine gegebenenfalls substituierte Alkylgruppe von 1 bis 4 C-Atomen, wie beispielsweise eine durch eine Sulfo-, Sulfato-, Phosphato- oder Carboxygruppe substituierte Alkylgruppe von 1 bis 4 C-Atomen;

$R^2$ ist eine Alkylgruppe von 1 bis 4 C-Atomen, die durch 1 oder 2 Substituenten aus der Gruppe Sulfato, Sulfo, Carboxy und Phosphato substituiert sein kann, oder eine Arylgruppe, wie eine Phenyl- oder Naphthylgruppe, die durch 1, 2 oder 3 Substituenten aus der Gruppe Sulfo und Carboxy substituiert sein kann, oder ist eine durch eine Arylgruppe substituierte Alkylgruppe von 1 bis 4 C-Atomen, die im Arylrest, wie dem Phenyl- oder einem Naphthylrest, durch 1, 2 oder 3 Substituenten aus der Gruppe Sulfo und Carboxy substituiert sein kann;

$R^3$ ist eine Alkylgruppe von 1 bis 4 C-Atomen, die durch 1 oder 2 Substituenten aus der Gruppe Sulfato, Sulfo, Carboxy und Phosphato, bevorzugt Sulfato und Sulfo, substituiert sein kann, oder ist eine durch 1 oder 2 Substituenten aus der Gruppe Sulfo und Carboxy substituierte Phenylgruppe;

$R^4$ ist ein Wasserstoffatom oder eine Sulfogruppe, eine Carboxygruppe, eine Alkylgruppe von 1 bis 4 C-Atomen, insbesondere hiervon die Methylgruppe, eine Alkoxygruppe von 1 bis 4 C-Atomen, insbesondere hiervon die Methoxygruppe, oder ein Bromatom;

$R^5$ ist ein Wasserstoffatom oder eine Sulfogruppe, eine Carboxygruppe, eine Alkylgruppe von 1 bis 4 C-Atomen, insbesondere hiervon die Methylgruppe, eine Alkoxygruppe von 1 bis 4 C-Atomen, insbesondere hiervon die Methoxygruppe, oder ein Bromatom;

$R^6$ ist eine Alkylgruppe von 1 bis 4 C-Atomen, wie insbesondere hiervon die Methylgruppe, eine Hydroxygruppe, eine Carboxygruppe, eine Sulfogruppe oder ein Chloratom;

$R^7$ ist eine Sulfogruppe, eine Sulfonamidgruppe entsprechend der obengenannten und definierten allgemeinen Formel (III) oder eine Carboxygruppe;

n steht für die Zahl 1, 2 oder 3;

M ist ein Wasserstoffatom oder bevorzugt ein Alkalimetall, wie Natrium, Kalium und Lithium.

Bevorzugt liegen die Farbstoffe der allgemeinen Formeln (I) und (II) in Form der $\beta$-Sulfatoethyl-Derivate vor.

Die in den einzelnen Formeln zweifach oder mehrfach auftretenden Formelglieder können jeweils die gleiche Bedeutung oder eine voneinander verschiedene Bedeutung besitzen; insbesondere die jeweils zweifach auftretenden Formelglieder in den allgemeinen Formeln (Ia) und (Ib) besitzen bevorzugt die jeweils gleiche Bedeutung. Im übrigen können die verschiedenen Formelglieder Bedeutungen besitzen, die im Rahmen der angegebenen Bedeutungen zueinander gleich oder voneinander verschieden sind.

In den vorstehenden und in den nachstehenden Angaben sind Carboxygruppen Gruppen der allgemeinen Formel -COOM mit M der obengenannten Bedeutung; ebenso sind Sulfogruppen Gruppen der allgemeinen Formel $-SO_3M$ , Phosphatogruppen Gruppen der allgemeinen Formel $-OPO_3M_2$ und Sulfatogruppen Gruppen der allgemeinen Formel $-OSO_3M$ jeweils mit M der obengenannten Bedeutung.

In den erfindungsgemäßen Farbstoffmischungen bzw. erfindungsgemäß angewendeten Farbstoffzusammensetzungen sind der oder die Farbstoffe der allgemeinen Formeln (I) und der oder die Farbstoffe der allgemeinen Formeln (II) im Verhältnis von 90:10 bis 10:90 Gewichtsteilen enthalten; bevorzugt sind die Anteile der Farbstoffe (I) und (II) innerhalb des Bereiches von 30 Gewichtsteilen des oder der Farbstoffe der allgemeinen Formeln (I) und 70 Gewichtsteilen des oder der Farbstoffe der allgemeinen Formeln (II) bis 60 Gewichtsteilen des oder der Farbstoffe der allgemeinen Formeln (I) und 40 Gewichtsteilen des oder der

Farbstoffe der allgemeinen Formeln (II). Insbesondere bevorzugt liegen die Farbstoffe der allgemeinen Formeln (I) und (II) im Mischungsverhältnis zwischen 30:70 und 50:50 Gewichtsteilen vor bzw. finden in diesem Verhältnis ihre Verwendung zum Färben.

Die Farbstoffe der allgemeinen Formeln (I) und (II) sind bekannt oder in ihrem chemischen Aufbau bekannten Farbstoffen analog, so daß die per se noch nicht beschriebenen Farbstoffe analog den per se beschriebenen Farbstoffen hergestellt werden können.

Farbstoffe der allgemeinen Formel (Ia) sind aus der europäischen Patentanmeldungs-Veröffentlichung Nr. 0 141 996 und der deutschen Offenlegungsschrift 3 439 756 bekannt; Farbstoffe der allgemeinen Formel (Ib) sind in den europäischen Patentanmeldungs-Veröffentlichungen Nrs. 0 101 665A und 0 144 580A beschrieben, die Farbstoffe der allgemeinen Formel (IIa) in den deutschen Offenlegungsschriften 3 025 572 und 3 113 989, in der britischen Patentschrift 1 183 661 und in der US-Patentschrift 2 657 205 (Spalten 9/10), die Farbstoffe der allgemeinen Formel (IIb) in der US-Patentschrift 4 412 948, die Farbstoffe der allgemeinen Formel (IIc) in der britischen Patentanmeldungs-Veröffentlichung Nr. 2 029 850A und die Farbstoffe der allgemeinen Formel (IId) in der US-PS 3 669 951, in den deutschen Offenlegungsschriften 1 644 204, 3 029 699 und 3 225 370 und in der europäischen Patentanmeldungs-Veröffentlichung Nr. 0 059 782A.

Die erfindungsgemäßen Farbstoffgemische können in fester, d.h. insbesondere pulvriger Form oder in Form von Granulaten, vorliegen. In der Regel enthalten sie zusätzlich die üblichen Elektrolytsalze, wie Natriumchlorid, Kaliumchlorid und Natriumsulfat, die aus der Synthese herstammen können. Desweiteren können sie Puffersubstanzen, die Säuren abzupuffern vermögen, enthalten, wie beispielsweise Alkaliacetate, Natriumhydrogenphosphat, Dinatriumhydogenphoshat und Natriumborat. Weiterhin können die Farbstoffmischungen andere für Farbstoffpräparationen übliche Substanzen enthalten, wie Sikkative, Fungizide und Färbehilfsmittel.

Die Farbstoffzusammensetzungen können auch in Form einer flüssigen Lösung vorliegen, insbesondere als wäßrige Lösungen mit einem Gesamtfarbstoffgehalt der Farbstoffe (I) und (II) von mindestens 10 Gew.-%, bevorzugt zwischen 10 und 40 Gew.-%. Die Lösungen können ebenfalls die eben für die festen Präparationen genannten üblichen und gängigen Zusätze enthalten und besitzen bevorzugt einen pH-Wert zwischen 4 und 7.

Die erfindungsgemäßen Farbstoffmischungen aus den Farbstoffen der allgemeinen Formeln (I) und (II) können zusätzlich noch faserreaktive Farbstoffe anderer Konstitution und Nuance besitzen, mit denen in üblicher Weise Mischnuancen auf dem Fasermaterial erhältlich sind.

Die mit den erfindungsgemäßen Farbstoffzusammensetzungen egal und in guten Echtheiten färbbaren carbonamidgruppenhaltigen Materialien sind beispielsweise synthetische Polyamidfasermaterialien und Wolle. Insbesondere bevorzugt und vorteilhaft werden jedoch hydroxygruppenhaltige Fasermaterialien mit den erfindungsgemäßen Farbstoffzusammensetzungen egal und in guten Echtheiten gefärbt; hydroxygruppenhaltige Fasermaterialien sind insbesondere Cellulosefasermaterialien, wie Baumwolle.

Die erfindungsgemäßen Farbstoffmischungen lassen sich in an und für sich üblicher Weise herstellen, wie beispielsweise durch Vermischen der einzelnen festen Farbstoffkomponenten, die aus der Synthese durch Aussalzen oder Sprühtrocknung der Syntheselösung erhältlich sind, oder durch Vermischen der Syntheselösungen der einzelnen Farbstoffkomponenten und anschließender gemeinsamer Isolierung durch Aussalzen oder Sprühtrocknung. Hierbei können die üblichen, obengenannten Zusätze den Lösungen selbst, eventuell vor deren Sprühtrocknung, oder den festen Einzelkomponenten oder deren Mischungen zugegeben werden.

Bevorzugte erfindungsgemäße Farbstoffzusammensetzungen sind solche mit Farbstoffen der allgemeinen Formeln (I) und (II), in welchen die einzelnen Formelglieder die folgenden Bedeutungen besitzen:

Z, Z', M und n haben die obengenannten Bedeutungen;

- $R$ ist eine Sulfogruppe oder eine N-($\beta$-Sulfoethyl)-sulfamoyl-, N-Methyl-N-($\beta$-sulfoethyl)-sulfamoyl- oder N-($\beta$-Sulfatoethyl)-sulfamoyl-Gruppe;
- $R^1$ ist ein Wasserstoffatom oder die Methylgruppe;
- $R^2$ ist eine $\beta$-Sulfatoethyl-, $\beta$-Sulfoethyl-, Carboxymethyl-, $\beta$-Carboxyethyl-, $\gamma$-Sulfatopropyl-, $\gamma$-Sulfopropyl-, $\beta$-Sulfatopropyl-, $\beta,\gamma$-Disulfato-propyl-, Monosulfophenyl-, Monosulfobenzyl- oder $\beta$-(Monosulfophenyl)-ethyl-Gruppe;
- $R^3$ ist die 2,5-Disulfophenyl-, 2,4-Disulfophenyl- oder 4-Sulfophenyl-Gruppe;
- $R^4$ ist ein Wasserstoffatom;
- $R^5$ ist ein Wasserstoffatom oder die Methylgruppe;
- $R^6$ ist ein Chloratom;
- $R^7$ ist die Sulfogruppe oder die Sulfamoylgruppe.

Weiterhin sind bevorzugte erfindungsgemäße Zusammensetzungen solche mit einem oder mehreren

Farbstoffen der allgemeinen Formeln (I), in welchen $R^2$ eine $\beta$-Sulfoethyl-, $\beta$-Sulfatoethyl-, $\beta$-Sulfatopropyl-, Carboxymethyl-, $\beta$-Carboxyethyl-, $\gamma$-Carboxypropyl-, Monosulfophenyl-, Monosulfobenzyl- oder $\beta$-(Monosulfophenyl)-ethyl-Gruppe bedeutet, Z für die $\beta$-Sulfatoethyl-Gruppe steht und $R^3$ die 2,5-Disulfophenyl-Gruppe bedeutet.

Bevorzugte erfindungsgemäße Zusammensetzungen sind weiterhin solche mit einem oder mehreren Farbstoffen der allgemeinen Formeln (II), in welchen $R^4$ und $R^5$ jeweils ein Wasserstoffatom bedeuten, $R^6$ ein Chloratom in meta-Stellung zur Aminogruppe ist und $R^7$ eine Sulfogruppe oder eine Sulfonamidgruppe der allgemeinen Formel (III) bedeutet, in welcher $R^8$ für ein Wasserstoffatom steht und $R^9$ die für Formel (III) angegebene Bedeutung hat.

Weiterhin sind solche Farbstoffzusammensetzungen besonders bevorzugt, in denen in den Farbstoffen der allgemeinen Formel (I) $R^1$ für ein Wasserstoffatom und R für die Sulfogruppe steht.

Bevorzugt sind erfindungsgemäße Farbstoffzusammensetzungen aus jeweils nur einem Farbstoff der Farbstoffkomponenten (I) und (II).

Von den erfindungsgemäßen Farbstoffzusammensetzungen sind weiterhin insbesondere die folgenden hervorzuheben:

a) Zusammensetzungen mit einem Farbstoff der allgemeinen Formel (IV) und einem Farbstoff der Formel (V)

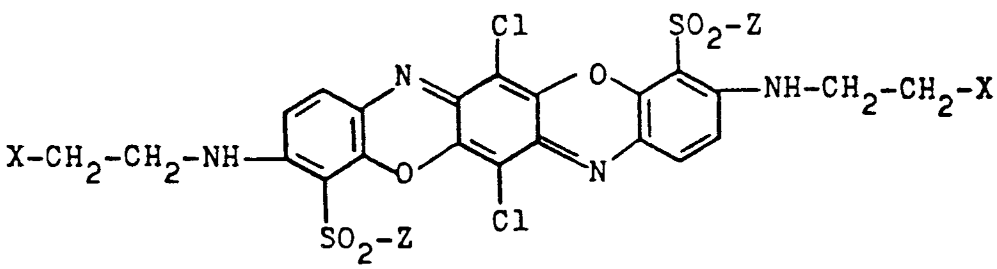

(IV)

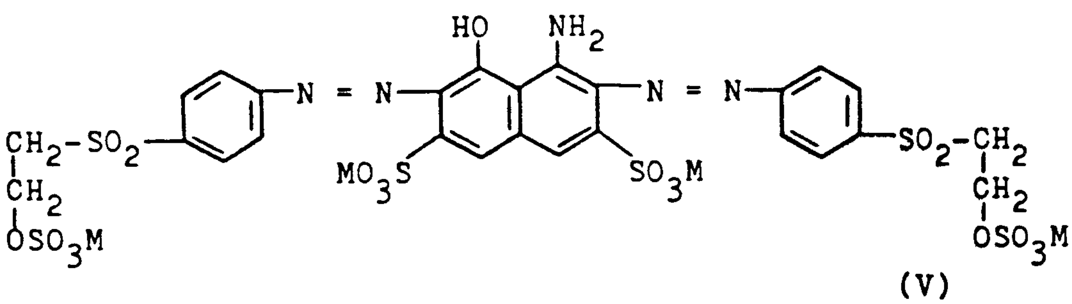

(V)

in welchen M und Z die obengenannten, insbesondere bevorzugten Bedeutungen besitzen und X für die Sulfato- oder Sulfogruppe steht;

b) Zusammensetzungen mit einem Farbstoff der oben genannten und definierten allgemeinen Formel (IV) und einem Farbstoff der Formel (VI)

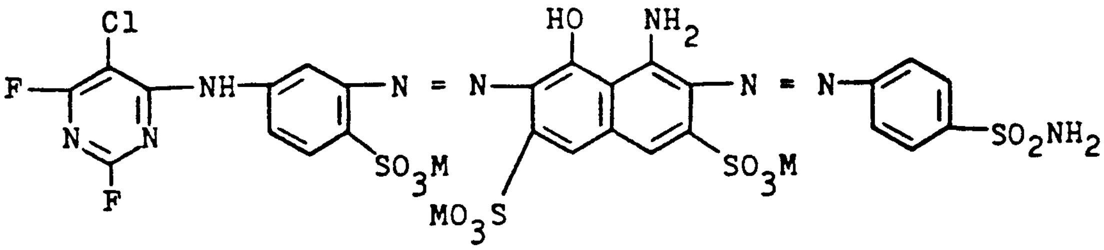

(VI)

in welcher M die obengenannte Bedeutung besitzt;

c) Zusammensetzungen mit einem Farbstoff der Formel (VII) und einem Farbstoff der Formel (VIII)

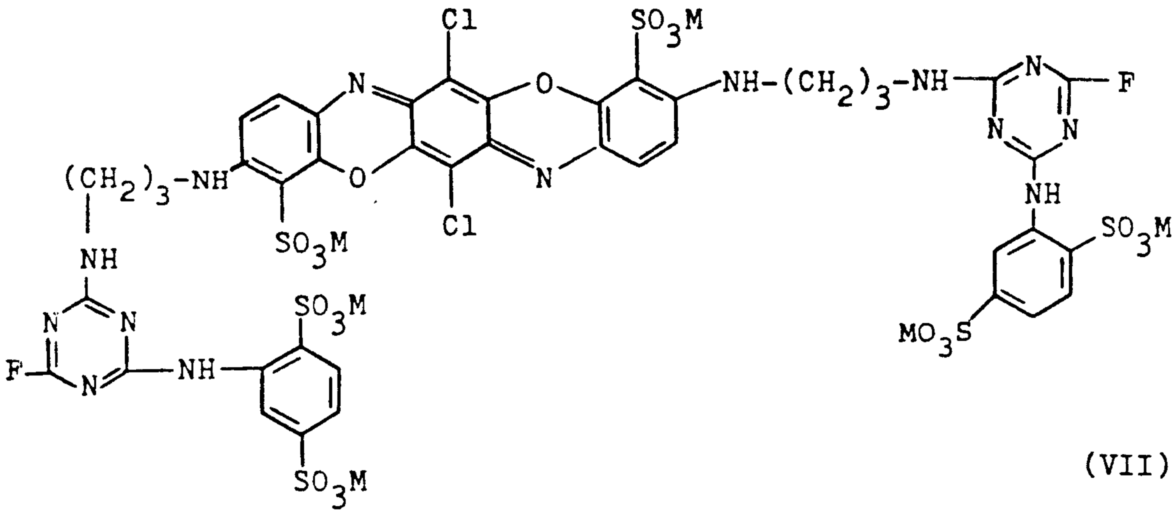

(VII)

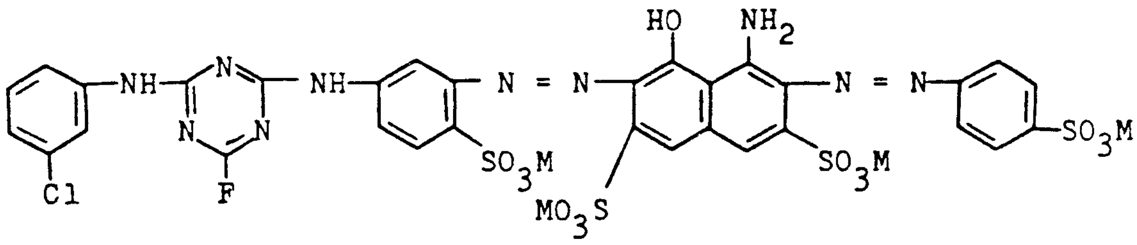

(VIII)

in welchen M die obengenannte Bedeutung besitzt;

d) Zusammensetzungen mit einem Farbstoff der Formel (VII) und einem Farbstoff der Formel (V);

e) Zusammensetzungen mit einem Farbstoff der allgemeinen Formel (IV) und einem Farbstoff der Formel (IX)

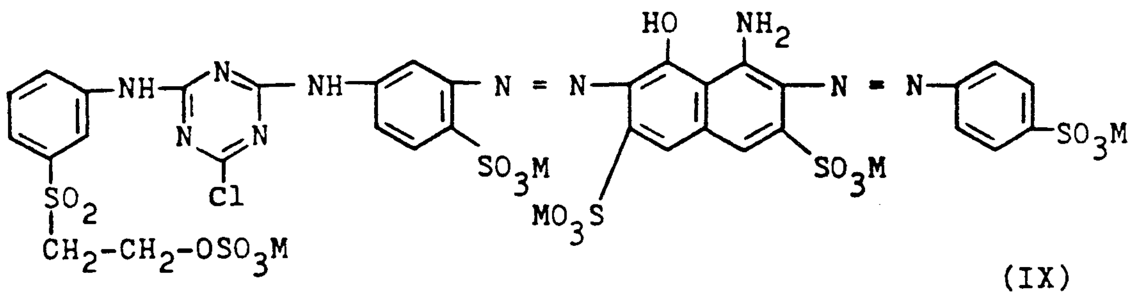

(IX)

in welcher M die obengenannte Bedeutung besitzt.

Die erfindungsgemäßen Farbstoffmischungen lassen sich nach den üblichen Applikations- und Fixierverfahren für faserreaktive Farbstoffe anwenden, wie sie zahlreich, bspw. aus der zuvor genannten Literatur, bekannt sind. Die erfindungsgemäßen Farbstoffzusammensetzungen zeichnen sich durch eine sehr gute Wasserlöslichkeit aus und besitzen eine hohe Affinität zum Färbesubstrat, so daß Färbungen und Drucke mit hohen Farbtiefen und Farbausbeuten erzielt werden. Trotz ihrer hohen Faseraffinität liefern die erfindungsgemäßen Farbstoffmischungen in überraschender Weise Färbungen von hoher Egalität, da die beiden Farbstoffkomponenten der Formeln (I) und (II) homogen auf dem Substrat fixieren. Insbesondere vorteilhaft zeigt sich dieses färberische Verhalten der erfindungsgemäßen Farbstoffmischungen in den Färbeweisen des Ausziehverfahrens aus wäßrigem Bad, wobei bevorzugt mit einem Flottenverhältnis von 1:10 bis 1:50 und einer Färbetemperatur von 30 bis 70 °C gefärbt wird.

Bevorzugt ist deshalb das mit ausgezeichneter Farbausbeute verlaufende Ausziehverfahren im alkalischen Medium unter Verwendung verschiedenster Alkalizusätze, wie sie für die Färbung von Zellulosefasern mit Reaktivfarbstoffen vom Vinylsulfontyp üblich sind, beispielsweise Natronlauge, Soda oder Natriumbicarbonat sowie weiterer Färbereihilfsmittel, wie Natriumchlorid oder Natriumsulfat.

Sehr gute Farbausbeuten werden auch mit den bekannten Klotzverfahren erzielt, wobei eine erfindungsgemäße Farbstoffmischung mittels Alkali durch Verweilen bei Raumtemperatur, durch Dämpfen oder mit Trockenhitze fixiert werden kann.

Beim Drucken auf Cellulosefasermaterialien können beispielsweise die üblichen einphasigen Verfahren in Anwesenheit eines säurebindenden Mittels, wie Natriumbicarbonat, Natriumcarbonat oder Natriumtrichloracetat, in der Druckpaste mit anschließendem Fixieren durch Dämpfen, beispielsweise bei 100 - 103° C, oder die zweiphasigen Verfahren unter Verwendung neutraler oder schwach saurer Druckpasten, nach deren Druck das Fasermaterial durch ein heißes elektrolythaltiges alkalisches Bad geführt oder mit einer alkalischen elektrolythaltigen Klotzflotte überklotzt und anschließend durch Dämpfen oder Trockenhitze fixiert wird, verwendet werden. Man erhält auf diese Weise Drucke mit gutem Stand der Konturen und einem klaren Weißfond.

Mit den erfindungsgemäßen Farbstoffmischungen lassen sich auch Mischungen von Cellulosefasern mit anderen natürlichen oder synthetischen Fasern, beispielsweise Mischungen von Cellulosefasern mit Synthesefasern, wie Polyester- oder Polyacrylfasern, färben. Die Färbung erfolgt dabei in der Regel zweistufig, wobei der Celluloseanteil der Fasermischung mit einer erfindungsgemäßen Farbstoffmischung und der Synthesefaseranteil mit einem dafür geeigneten Farbstoff, beispielsweise einem Dispersionsfarbstoff, gefärbt wird. Bei bestimmten Farbstoffen und Fasermischungen kann das Färbeverfahren auch einstufig erfolgen.

Die mit den erfindungsgemäßen Farbstoffmischungen erhältlichen Färbungen oder Drucke auf Zellulosefasermaterialien besitzen beachtliche Echtheiten, von denen insbesondere die wichtigen Fabrikations- und Gebrauchsechtheiten hervorzuheben sind, wie Lichtechtheit, Waschechtheit bei 60° C und 95° C, saure und alkalische Walkechtheit, Wasserechtheit, Seewasserechtheit, saure Überfärbeechtheit, alkalische und saure Schweißechtheit sowie die Plissier-, Bügel- und Reibechtheiten.

Die erfindungsgemäßen Farbstoffmischungen können auch Hilfsmittel zum Färben oder Drucken, wie sie für die Anwendung von Reaktivfarbstoffen üblich sind, enthalten. Hilfsmittel sind beispielsweise Wasser oder hydrotrope Mittel wie Glycerin, Glykol- oder Polyglykolether oder Harnstoff, Oxidationsmittel gegen die Reduktionswirkung der Zellulose, wie 2,4-Dinitrobenzolsulfonsäure oder 3-Nitrobenzolsulfonsäure, Salze zur Erhöhung der Fixierausbeute, wie Natriumchlorid oder Natriumsulfat, oder Netzmittel, organische Lösemittel oder Fixiermittel, wie Natronlauge, Soda, Natriumhydrogencarbonat, Wasserglas, Trinatriumphosphat.

Die erfindungsgemäßen Farbstoffmischungen können als solche in der festen oder in der flüssigen, gelösten Form vom Färber oder Drucker angewendet werden. Es ist jedoch in erfindungsgemäßer Weise auch möglich, wie anfangs bereits erwähnt, die beiden Farbstoffkomponenten im angegebenen Mischungsbereich getrennt in das Färbebad, die Färbeflotte oder die Druckpaste einzusetzen bzw. einzuarbeiten. Die Erfindung betrifft deshalb nicht nur die Verwendung von Farbstoffmischungen der allgemeinen Formeln (I) und (II) in den angegebenen Mischungsverhältnissen zum Färben von carbonamidgruppenhaltigen oder bevorzugt hydroxygruppenhaltigen Fasermaterialien nach den für faserreaktive Farbstoffe üblichen Färbeweisen bzw. ein Verfahren zum Färben (einschließlich Bedrucken) solcher Fasermaterialien unter Anwendung der genannten erfindungsgemäßen Farbstoffmischungen nach den für faserreaktive Farbstoffe üblichen Färbe- und Fixierbedingungen, sondern die Erfindung betrifft auch die gleichzeitige Verwendung eines oder mehrerer Farbstoffe, die den allgemeinen Formeln (I) entsprechen, mit einem oder mehreren Farbstoffen, die den allgemeinen Formeln (II) entsprechen, in den angegebenen Mengenverhältnissen zum Färben (einschließlich Bedrucken) der genannten Fasermaterialien nach den für faserreaktive Farbstoffe üblichen Färbeweisen bzw. ein Verfahren zum Färben (einschließlich Bedrucken) dieser Fasermaterialien unter gleichzeitiger Anwendung der beiden Farbstofftypen (I) und (II) in den angegebenen Mengenverhältnissen.

Die nachfolgenden Beispiele dienen zur Erläuterung der Erfindung. Die Teile sind Gewichtsteile und die Prozentangaben beziehen sich auf Gewichtsprozente, sofern nicht anders vermerkt; Gewichtsteile verhalten sich zu Volumenteilen wie Kilogramm zu Liter.

## BEISPIELE

### Beispiel 1

100 Teile eines gebleichten Baumwolltrikots werden bei 20 bis 25° C in eine Lösung von 0,6 Teilen des Farbstoffes der Formel (A), 1,2 Teilen des Farbstoffes der Formel (B) und 50 Teilen Natriumsulfat-Decahydrat in 1000 Teilen Wasser eingebracht.

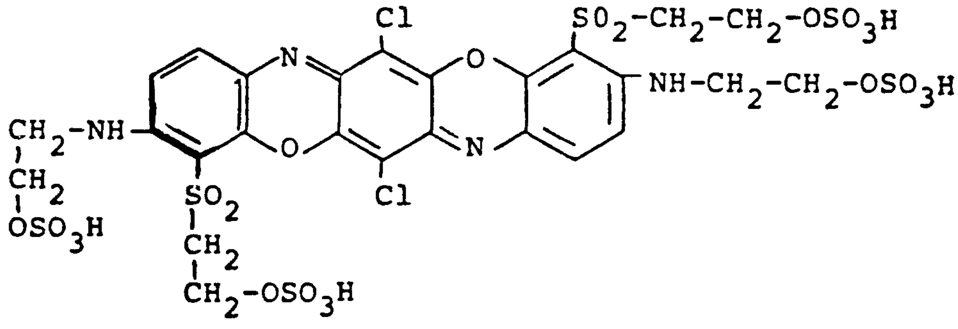

(A)

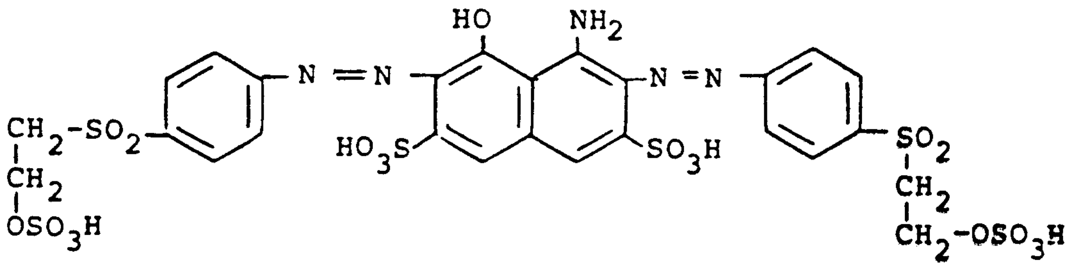

(B)

5 Teile wasserfreies Natriumcarbonat und 2 Teile einer wäßrigen 32%igen Natronlauge werden hinzugegeben. Unter guter Bewegung des Baumwollmaterials wird das Färbebad innerhalb von 15 Minuten auf 40° C erwärmt, und die Färbung wird während 90 Minuten bei dieser Temperatur fortgeführt. Anschließend wird das gefärbte Material in üblicher Weise fertiggestellt, so durch Spülen mit kaltem und warmem Wasser, durch Neutralisation in einem wäßrigen, verdünnte Essigsäure enthaltenden Bad, durch anschließendes kochendes Behandeln in einer ein nicht-ionogenenes Waschmittel enthaltenden wäßrigen Waschlösung, durch nochmaliges Spülen mit warmem und kaltem Wasser und anschließendes Trocken.

Es wird eine farbtiefe, egale und lebhafte marineblaue Färbung mit guten Echtheitseigenschaften, wie insbesondere einer guten Chlorwasserechtheit und einer guten Lichtechtheit, erhalten.

Vergleichsbeispiel 1a

Man verfährt gemäß der Verfahrensweise des Beispieles 1, jedoch nur unter Verwendung von 2 Teilen des Farbstoffes (A). Man erhält eine klare blaue Färbung mit schlechter Egalität und einem mit dunklen Flecken überhäuften Warenbild.

Vergleichsbeispiel 1b

Man verfährt gemäß der Verfahrensweise des Beispieles 1, jedoch nur unter Verwendung von 2 Teilen des Farbstoffes (B). Man erhält eine Färbung mit einem trüben marineblauen Farbton und mit schlechten Chlorwasser- und Lichtechtheiten.

Beispiel 2

100 Teile eines Gewebes aus mercerisierter Baumwolle werden bei 20 bis 25° C in eine Lösung von 0,6 Teilen des Farbstoffes (A), 1,2 Teilen des Farbstoffes (B) und 50 Teilen Natriumsulfat-Decahydrat in 1000 Teilen Wasser eingebracht. Sodann werden 5 Teile wasserfreies Natriumcarbonat und 1 Teil einer wäßrigen 32%igen Natronlauge hinzugegeben. Unter guter Bewegung des Baumwollmaterials wird das Färbebad innerhalb von 15 Minuten auf 60° C erwärmt, und die Färbung wird 90 Minuten bei dieser Temperatur weitergeführt. Anschließend wird das erhaltene gefärbte Material in üblicher Weise, so gemäß Beispiel 1, fertiggestellt. Man erhält ebenfalls eine farbtiefe, gleichmäßige marineblaue Färbung mit den in Beispiel 1

genannten guten Echtheitseigenschaften.

Beispiel 3

Man verfährt gemäß der Verfahrensweise des Beispieles 1, verwendet jedoch an Stelle des zu färbenden Materials 200 Teile eines Gewebes aus einer Fasermischung von 67 Teilen Polyesterfasern und 33 Teilen Baumwolle. Man erhält eine Färbung mit gleichmäßigem marineblauen Farbton des Baumwollanteiles, die ebenfalls die in Beispiel 1 genannten guten Echtheiten aufweist.
Der Polesterfaseranteil kann in üblicher Weise mit einem entsprechenden Dispersionsfarbstoff nach oder auch vor der Fixierung der erfindungsgemäßen faserreaktiven Farbstoffmischung getrennt gefärbt bzw. überfärbt werden; man erhält so insgesamt eine gleichmäßige Unifärbung in farbtiefen marineblauen Tönen.

Beispiele 4 bis 6

Man verfährt jeweils gemäß der Verfahrensweise des Beispieles 1, setzt jedoch die beiden Farbstoffe (A) und (B) in anderen Mischungsverhältnissen, wie nachfolgend tabellarisch angegeben, ein. Man erhält auf diese Weise ebenfalls egale Färbungen ohne Streifen und Flecken und mit den genannten guten Echtheitseigenschaften in einem für das jeweilige Tabellenbeispiel angegebenen Farbton.

| Bsp. | ... Teile Farbstoff (A) | ... Teile Farbstoff (B) | Farbton |
|---|---|---|---|
| 4 | 0,2 | 1,6 | rotstichiges Marineblau |
| 5 | 0,4 | 0,4 | lebhaftes Marineblau |
| 6 | 1,1 | 0,7 | grünstichiges Marineblau |

Beispiel 7

Ein Gewebe aus mercerisierter Baumwolle wird bei einer Temperatur von etwa 20 °C mit einer Flottenaufnahme von 70% mit einer Färbeflotte geklotzt, die aus 1000 Teilen Wasser, 6 Teilen des Farbstoffes der Formel (C)

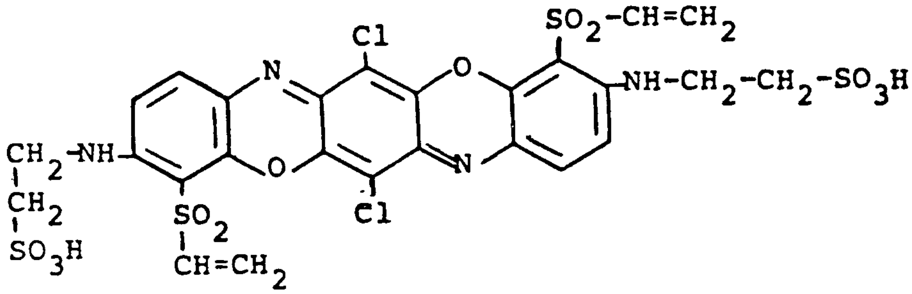

(C),

8 Teilen des Farbstoffes der Formel (B), 23 Teilen einer wäßrigen 32%igen Natronlauge, 130 Teilen eines wäßrigen Wasserglases mit einem Gehalt von 38° Bé und 3 Teilen eines handelsüblichen Netzmittels besteht. Das geklotzte Gewebe wird sofort luftdicht in eine Folie gewickelt und 16 Stunden bei 20 °C verweilen lassen. Das gefärbte Material wird anschließend in üblicher Weise, so gemäß Beispiel 1, fertiggestellt.

Man erhält eine kräftige marineblaue Färbung mit guter Egalität und guten Chlorwasser- und Lichtechtheiten.

Beispiel 8

Man stellt eine wäßrige Druckpaste her, die in 1000 Tl. neben Wasser 10 Teile des Farbstoffes der Formel (D), 8 Teile des Farbstoffes (E), 450 Teile einer wäßrigen 4%igen Natriumalginat-Verdickung, 1 Teil Natriumdihydrogenphosphat und 10 Teile des Natriumsalzes der 2,4-Dinitrobenzolsulfonsäure enthält.

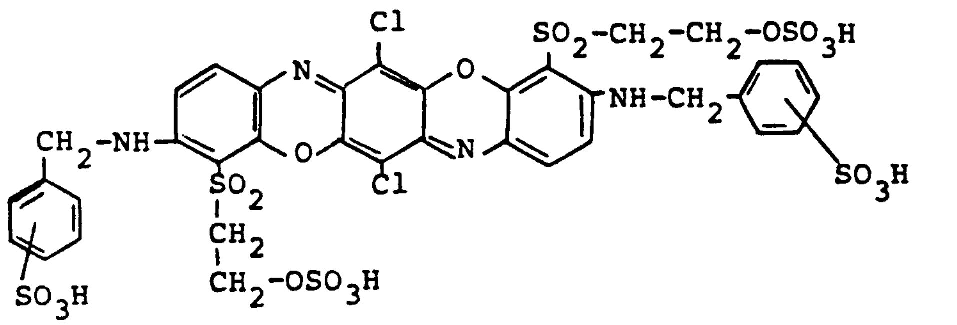

(D)

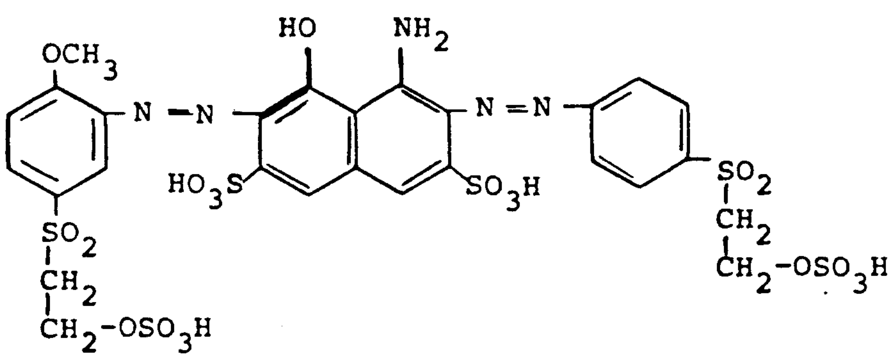

(E)

In dieser Druckpaste wird ein Gewebe aus mercerisierter Baumwolle im Filmdruckverfahren bedruckt. Anschließend wird das bedruckte Gewebe während 25 Sekunden bei 110° C geämpft und sodann mit einer Lösung, bestehend aus 1000 Teilen Natriumchlorid, 100 Teilen wasserfreiem Natriumcarbonat, 50 Teilen wasserfreiem Kaliumcarbonat und 70 Volumenteilen einer wäßrigen 32%igen Natronlauge und 100 Teilen Wasser, mit einer Flottenaufnahme von 70% überklotzt, sodann nochmals 8 Sekunden bei 110° C gedämpft und anschließend durch Spülen mit kaltem und warmem Wasser, durch kochende Behandlung in einer ein nicht-ionogenes Waschmittel enthaltenden Waschlösung, durch nochmaliges Spüllen in warmem und kaltem Wasser und Trocknen fertiggestellt.

Man erhält einen farbstarken, grünstichig marineblauen Druck von hoher Egalität und guten Echtheiten, von denen insbesondere die gute Lichtechtheit hervorgehoben werden kann.

Beispiel 9

An Stelle der direkten Anwendung von festen Farbstoffpulvern der einzelnen erfindungsgemäß verwendeten Farbstoffe oder deren festen Mischungen können die erfindungsgemäß verwendeten Farbstoffe auch zuvor in einer lagerstabilen wäßrigen Lösung eingesetzt werden. Eine wäßrige lagerstabile Lösung der erfindungsgemäßen Farbstoffgemische erhält man beispielsweise durch Lösen von entsprechenden Mengen des Farbstoffes der Formel (A) und des Farbstoffes der Formel (B) oder einer Mischung derselben in Wasser unter Zusatz eines Puffers, der die Lösung auf einen pH-Wert zwischen 3 und 7 einzustellen und zu halten vermag, so beispielsweise durch Lösen von 3,5 Teilen des Farbstoffes (A) und 6,5 Teilen des Farbstoffes (B) in 100 Teilen Wasser und anschließende Einstellung des pH-Wertes mit einem

Kaliumdihydrogenphosphat/Dinatriumhydrogenphosphat-Puffer auf einen pH-Wert von 5. Diese lagerstabile Flüssigeinstellung der erfindungsgemäßen Farbstoffmischung kann auch nach einer Lagerzeit von mehreren Wochen ohne Verlust der färberischen Eigenschaften zum Färben von Cellulosefasermaterial, wie Baumwolle, gemäß einer der in den vorherigen Beispielen angegebenen Färbeweisen eingesetzt werden.

Beispiele 10 bis 29

In den nachfolgenden Tabellenbeispielen sind weitere erfindungsgemäße Farbstoffgemische mit Hilfe von in der Beschreibung genannten allgemeinen Formeln beschrieben, die in erfindungsgemäßer Weise zum Färben von Cellulosefasermaterialien eingesetzt werden können, beispielweise gemäß einer der in den obigen Ausführungsbeispielen beschriebenen Färbeweise. Man erhält ebenfalls farbstarke Färbungen von guter Egalität mit guten Naßechtheiten, wie insbesondere einer guten Chlorwasserechtheit, Trockenlicht- und Naßlichtechtheit, in der für das jeweilige Tabellenbeispiel angegebenen Marineblau-Nuance.

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 10 | (Ia):<br>Z = β-Sulfatoethyl<br>$R^1$ = Wasserstoff<br>$R^2$ = β-Sulfatoethyl | (IIc):<br>$R^6$ = 3-Chlor<br>$R^7$ = 4-Sulfo | 1 : 1 Teile | grünstichig |
| 11 | (Ia):<br>Z = β-Sulfatoethyl<br>$R^1$ = Wasserstoff<br>$R^2$ = Sulfobenzyl | (IIa):<br>Z' = 4-β-Sulfatoethyl<br>$R^4$ = Wasserstoff<br>$R^5$ = Wasserstoff | 0,7 : 1,3 Teile | rotstichig |
| 12 | (Ia):<br>dito | (IId):<br>$R^7$ = 4-Sulfamoyl | 0,6 : 1,4 Teile | rotstichig |
| 13 | (Ia):<br>Z = β-Sulfatoethyl<br>$R^1$ = Wasserstoff<br>$R^2$ = β-Sulfoethyl | (IIa):<br>Z' = 4-β-Sulfatoethyl<br>$R^4$ = Wasserstoff<br>$R^5$ = Wasserstoff | 1 : 1 Teile | grünstichig |
| 14 | (Ia):<br>dito | (IIb):<br>Z' = 3-β-Sulfatoethyl<br>$R^7$ = 4-Sulfo | 0,8 : 1,2 Teile | grünstichig |

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 15 | (Ia):<br>dito | (IIc):<br>$R^6$ = 3-Chlor<br>$R^7$ = 4-Sulfo | 0,9 : 1,1 Teile | grünstichig |
| 16 | (Ia):<br>Z = Vinyl<br>$R^1$ = Wasserstoff<br>$R^2$ = β-Sulfoethyl | (IId):<br>$R^7$ = 4-Sulfamoyl | 0,8 : 1,2 Teile | neutral |
| 17 | (Ia):<br>dito | (IIa):<br>Z' = 4-β-Sulfatoethyl<br>$R^4$ = Wasserstoff<br>$R^5$ = Wasserstoff | 0,7 : 1,3 Teile | neutral |
| 18 | (Ia):<br>Z = Vinyl<br>$R^1$ = Wasserstoff<br>$R^2$ = β-Sulfatoethyl | (IIa):<br>dito | 0,8 : 1,2 Teile | neutral |
| 19 | (Ia):<br>Z = β-Sulfatoethyl<br>$R^1$ = Wasserstoff<br>$R^2$ = γ-Sulfato-n-propyl | (IIa):<br>dito | 1 : 1 Teile | grünstichig |

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 20 | (Ia):<br>Z = β-Sulfatoethyl<br>$R^1$ = Wasserstoff<br>$R^2$ = β-Carboxyethyl | (IIa):<br>dito | 0,7 : 1,3 Teile | neutral |
| 21 | (Ia):<br>Z = Vinyl<br>$R^1$ = Methyl<br>$R^2$ = β-Sulfoethyl | (IIa):<br>dito | 0,8 : 1,2 Teile | neutral |
| 22 | (Ia):<br>Z = β-Sulfatoethyl<br>$R^1$ = Wasserstoff<br>$R^2$ = Carboxymethyl | (IIa):<br>dito | 0,6 : 1,4 Teile | rotstichig |
| 23 | (Ia):<br>Z = β-Sulfatoethyl<br>$R^1$ = Wasserstoff<br>$R^2$ = β-(Sulfophenyl)-ethyl | (IIa):<br>dito | 0,6 : 1,4 Teile | rotstichig |
| 24 | (Ia):<br>Z = β-Sulfatoethyl<br>$R^1$ = Wasserstoff<br>R2 = β,γ-Di-sulfato-n-propyl | (IIa):<br>dito | 1,2 : 0,8 Teile | neutral |

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 25 | (Ia): <br> Z = β-Sulfatoethyl <br> $R^1$ = Wasserstoff <br> $R^2$ = β-Phosphatoethyl | (IIa): <br> dito | 1 : 1 Teile | grünstichig |
| 26 | (Ia): <br> Z = β-Sulfatoethyl <br> $R^1$ = Wasserstoff <br> $R^2$ = β-Sulfatoethyl | (IId): <br> $R^7$ = 4-Sulfamoyl | 0,7 : 1,3 Teile | neutral |
| 27 | (Ia): <br> Z = Vinyl <br> $R^1$ = Wasserstoff <br> $R^2$ = β-Sulfatoethyl | (IId): <br> dito | 0,7 : 1,3 Teile | neutral |
| 28 | (Ia): <br> Z = β-Sulfatoethyl <br> $R^1$ = Wasserstoff <br> $R^2$ = β-Sulfatoethyl | (IIb): <br> Z' = 3-β-Sulfatoethyl <br> $R^7$ = 4-Sulfo | 0,9 : 1,1 Teile | grünstichig |

Beispiel 29

50 Teile eines gebleichten Baumwollgewebes werden in eine Lösung von 0,8 T. des Farbstoffes der Formel (F) und 0,8 Teilen des in Beispiel 1 genannten Farbstoffes (B) in 500 Teilen Wasser eingebracht und darin kurz bewegt.

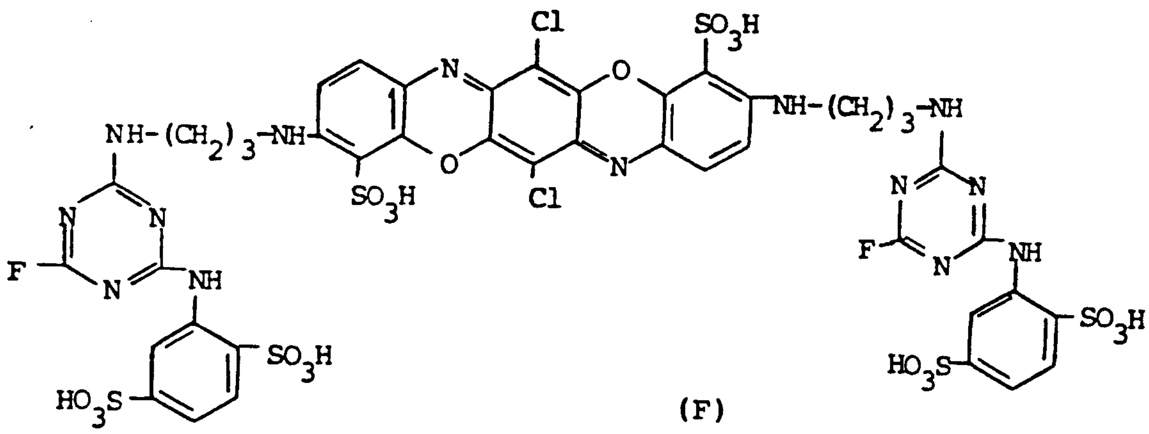

(F)

Sodann gibt man eine Lösung von 50 Teilen Natriumchlorid und 5 Teilen wasserfreiem Natriumcarbonat in 50 Teilen Wasser hinzu und erwärmt das Färbebad unter guter Bewegung des Baumwollmaterials innerhalb von 30 Minuten auf 60° C, hält die Färbetemperatur noch 20 Minuten und gibt sodann 1 Volumenteil einer wäßrigen 32%igen Natronlauge hinzu, hält die Färbetemperatur unter weiterer Bewegung des zu färbenden Materials bei 60° C für weitere 40 Minuten, nimmt das gefärbte Material sodann aus dem Bad und stellt es in üblicher Weise fertig.

Man erhält eine farbtiefe, egale Färbung in brillanter marineblauer Nuance.

Beispiele 30 bis 37

In den nachfolgenden Tabellenbeispielen sind weitere erfindungsgemäße Farbstoffgemische mit Hilfe von in der Beschreibung genannten allgemeinen Formeln beschrieben, die in erfindungsgemäßer Weise zum Färben von Cellulosefasermaterialien eingesetzt werden können, beispielweise gemäß einer der in den obigen Ausführungsbeispielen beschriebenen Färbeweise. Man erhält ebenfalls farbstarke Färbungen von guter Egalität mit guten Naßechtheiten, wie insbesondere einer guten Chlorwasserechtheit, Trockenlicht- und Naßlichtechtheit, in der für das jeweilige Tabellenbeispiel angegebenen Marineblau-Nuance.

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 30 | (Ib):<br>R = Sulfo<br>n = 3<br>$R^1$ = Wasserstoff<br>$R^3$ = 2,5-Disulfophenyl | (IIc):<br>$R^6$ = 3-Chlor<br>$R^7$ = 4-Sulfo | 1 : 1 Teile | grünstichig |
| 31 | (Ib):<br>R = N-(β-Sulfatoethyl)-sulfamoyl<br>n = 3<br>$R^1$ = Wasserstoff<br>$R^3$ = 2,5-Disulfophenyl | (IIc):<br>dito | 0,9 : 1,1 Teile | grünstichig |
| 32 | (Ib):<br>dito | (IIa):<br>Z' = 4-β-Sulatoethyl<br>$R^4$ = Wasserstoff<br>$R^5$ = Wasserstoff | 0,8 : 1,2 Teile | neutral |

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 33 | (Ib):<br>R = N-(β-Sulfoethyl)-sulfamoyl<br>n = 3<br>$R^1$ = Wasserstoff<br>$R^3$ = 4-Sulfophenyl | (IIa):<br>dito | 0,7 : 1,3 Teile | neutral |
| 34 | (Ib):<br>R = Sulfo<br>n = 2<br>$R^1$ = Wasserstoff<br>$R^3$ = 2,5-Disulfo-phenyl | (IIa):<br>dito | 0,6 : 1,4 Teile | rotstichig |
| 35 | (Ib):<br>R = N-(β-Sulfatoethyl)-sulfamoyl<br>n = 3<br>$R^1$ = Wasserstoff<br>$R^3$ = 2,5-Disulfo-phenyl | (IIa):<br>dito | 1,1 : 0,9 Teile | neutral |
| 36 | (Ib):<br>dito | (IId):<br>$R^7$ = 4-Sulfamoyl | 1 : 1 Teile | grünstichig |

| Bsp. | Farbstoff (I) entsprechend allg. Formel ... mit ... | Farbstoff (II) entsprechend allg. Formel ... mit ... | Mischungsverh. von (I) : (II) | Nuance |
|---|---|---|---|---|
| 37 | (Ib):<br>R = N-(β-Sulfoethyl)-sulfamoyl<br>n = 3<br>$R^1$ = Wasserstoff<br>$R^3$ = 4-Sulfophenyl | (IId):<br>dito | 1 : 1 Teile | grünstichig |

## Patentansprüche

**1.** Zusammensetzung von wasserlöslichen faserreaktiven Farbstoffen, dadurch gekennzeichnet, daß sie einen oder mehrere Farbstoffe entsprechend den allgemeinen Formeln (Ia) und (Ib) und einen oder

mehrere Farbstoffe entsprechend den allgemeinen Formeln (IIa), (IIb), (IIc) und (IId) im Verhältnis von 90:10 bis 10:90 Gewichtsteilen der Farbstoffe (I) und (11) enthält oder im wesentlichen daraus besteht:

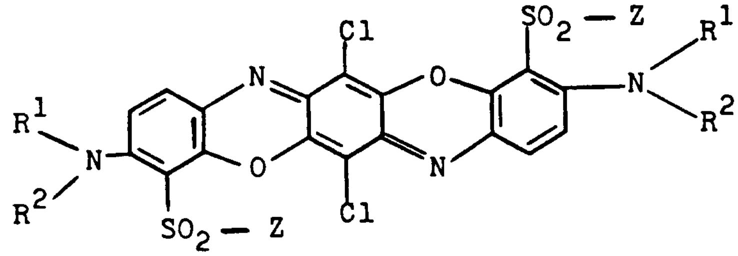

(Ia)

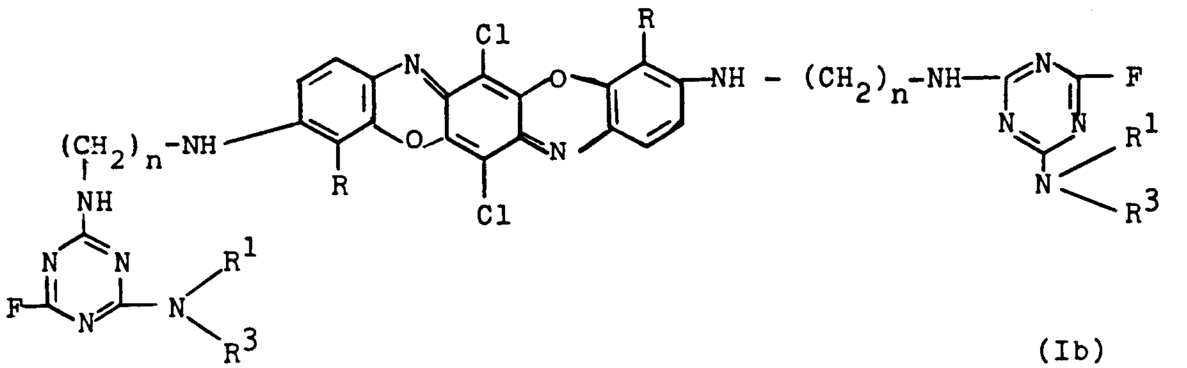

(Ib)

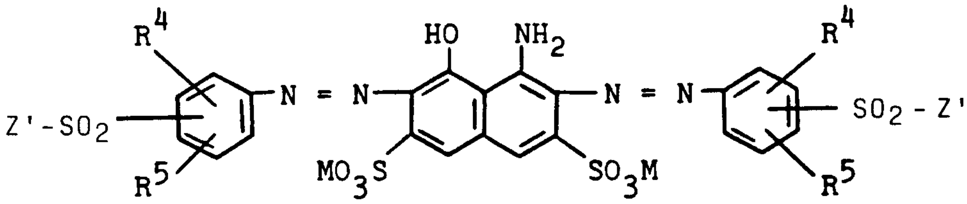

(IIa)

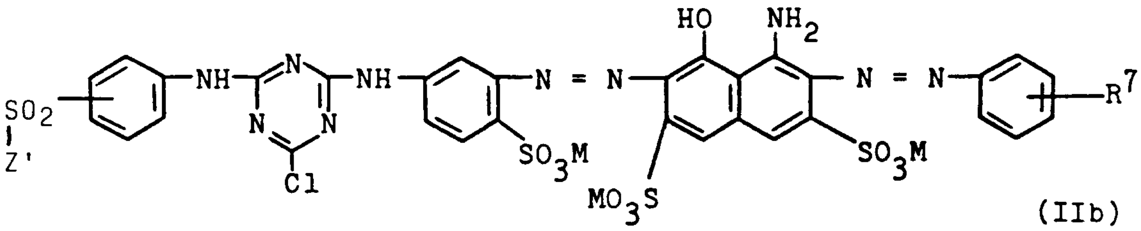

(IIb)

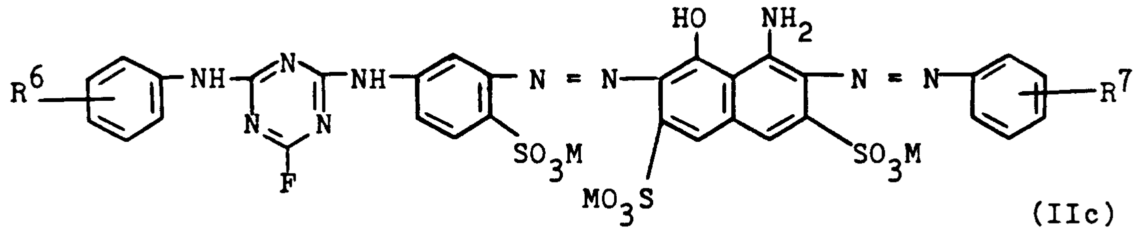

(IIc)

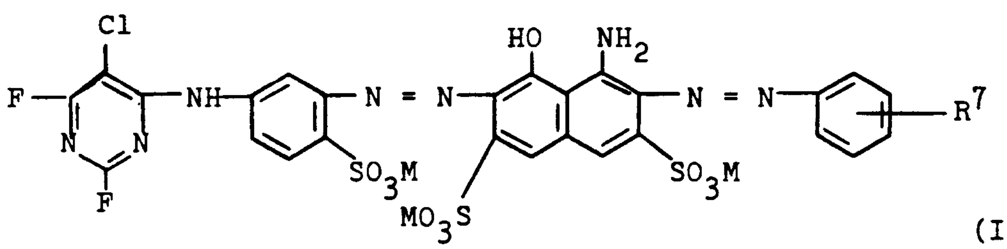

(IId)

worin die einzelnen Formelglieder zueinander gleiche oder voneinander verschiedene Bedeutungen besitzen und

- Z die Vinylgruppe oder die β-Sulfatoethyl-Gruppe ist,
- Z' die Vinylgruppe oder die β-Sulfatoethyl-Gruppe ist,
- R für die Sulfogruppe oder eine Sulfonamidgruppe der allgemeinen Formel (III)

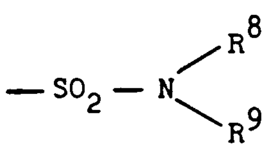

(III)

steht, in welcher

- $R^8$ ein Wasserstoffatom oder eine gegebenenfalls substituierte Alkylgruppe von 1 bis 4 C-Atomen ist und
- $R^9$ eine Alkylgruppe von 1 bis 4 C-Atomen bedeutet, die durch 1 oder 2 Substituenten aus der Gruppe Sulfato, Sulfo, Carboxy und Phosphato substituiert sein kann, oder eine Arylgruppe ist, die durch 1, 2 oder 3 Substituenten aus der Gruppe Sulfo und Carboxy substituiert sein kann, oder eine durch eine Arylgruppe substituierte Alkylgruppe von 1 bis 4 C-Atomen ist, die im Arylrest durch 1, 2 oder 3 Substituenten aus der Gruppe Sulfo und Carboxy substituiert sein kann,
- $R^1$ ein Wasserstoffatom oder eine gegebenenfalls substituierte Alkylgruppe von 1 bis 4 C-Atomen ist,
- $R^2$ eine Alkylgruppe von 1 bis 4 C-Atomen ist, die durch 1 oder 2 Substituenten aus der Gruppe Sulfato, Sulfo, Carboxy und Phosphato substituiert sein kann, oder eine Arylgruppe ist, die durch 1, 2 oder 3 Substituenten aus der Gruppe Sulfo und Carboxy substituiert sein kann, oder eine durch eine Arylgruppe substituierte Alkylgruppe von 1 bis 4 C-Atomen ist, die im Arylrest durch 1, 2 oder 3 Substituenten aus der Gruppe Sulfo und Carboxy substituiert sein

kann,

$R^3$ eine Alkylgruppe von 1 bis 4 C-Atomen ist, die durch 1 oder 2 Substituenten aus der Gruppe Sulfato, Sulfo, Carboxy und Phosphate substituiert sein kann, oder eine durch 1 oder 2 Substituenten aus der Gruppe Sulfo und Carboxy substituierte Phenylgruppe ist,

$R^4$ ein Wasserstoffatom oder eine Sulfogruppe, eine Carboxygruppe, eine Alkylgruppe von 1 bis 4 C-Atomen, eine Alkoxygruppe von 1 bis 4 C-Atomen oder ein Bromatom ist,

$R^5$ ein Wasserstoffatom, eine Sulfogruppe, eine Carboxygruppe, eine Alkylgruppe von 1 bis 4 C-Atomen, eine Alkoxygruppe von 1 bis 4 C-Atomen oder ein Bromatom ist,

$R^6$ eine Alkylgruppe von 1 bis 4 C-Atomen, eine Hydroxygruppe, eine Carboxygruppe, eine Sulfogruppe oder ein Chloratom ist,

$R^7$ eine Sulfogruppe, eine Sulfonamidgruppe der obengenannten und definierten allgemeinen Formel (III) oder eine Carboxygruppe ist,

n für die Zahl 1, 2 oder 3 steht und

M ein Wasserstoffatom oder ein Alkalimetall ist.

**2.** Zusammensetzung nach Anspruch 1 mit Mengenverhältnissen der Farbstoffe der allgemeinen Formeln (I) und (II) zwischen 30:70 und 60:40 Gewichtsteilen.

**3.** Zusammensetzung nach Anspruch 1 mit Mengenverhältnissen der Farbstoffe der allgemeinen Formeln (I) und (II) zwischen 30:70 und 50:50 Gewichtsteilen.

**4.** Zusammensetzung nach einem der Ansprüche 1 bis 3, dadurch gekennzeichnet, daß in den Farbstoffen der allgemeinen Formeln (I) und (II) die Formelreste Z und Z' jeder eine $\beta$-Sulfatoethyl-Gruppe ist.

**5.** Zusammensetzung nach einem der Ansprüche 1 bis 4, dadurch gekennzeichnet, daß in den Farbstoffen der allgemeinen Formeln (I) $R^1$ ein Wasserstoffatom und R eine Sulfogruppe bedeutet.

**6.** Zusammensetzung nach einem der Ansprüche 1 bis 5, dadurch gekennzeichnet, daß in den Farbstoffen der allgemeinen Formeln (I) $R^2$ für eine $\beta$-Sulfoethyl-, $\beta$-Sulfatoethyl-, $\beta$-Sulfatopropyl-, Carboxymethyl-, $\beta$-Carboxyethyl-, $\gamma$-Carboxypropyl-, Monosulfophenyl-, Monosulfobenzyl- oder $\beta$-(Monosulfophenyl)-ethyl-Gruppe steht und $R^3$ die 2,5-Disulfophenyl-Gruppe bedeutet.

**7.** Zusammensetzung nach einem der Ansprüche 1 bis 4, dadurch gekennzeichnet, daß in den Farbstoffen der allgemeinen Formeln (II) $R^4$ und $R^5$ jeweils ein Wasserstoffatom bedeuten, $R^6$ ein Chloratom in meta-Stellung zur Aminogruppe ist und $R^7$ eine Sulfogruppe oder eine Sulfonamidgruppe der in Anspruch 1 genannten allgemeinen Formel (III) bedeutet, in welcher $R^8$ für ein Wasserstoffatom steht und $R^9$ die für Formel (III) angegebene Bedeutung hat.

**8.** Zusammensetzung nach einem der Ansprüche 1 bis 3, dadurch gekennzeichnet, daß der Farbstoff entsprechend einer der allgemeinen Formeln (I) ein Farbstoff der allgemeinen Formel (IV)

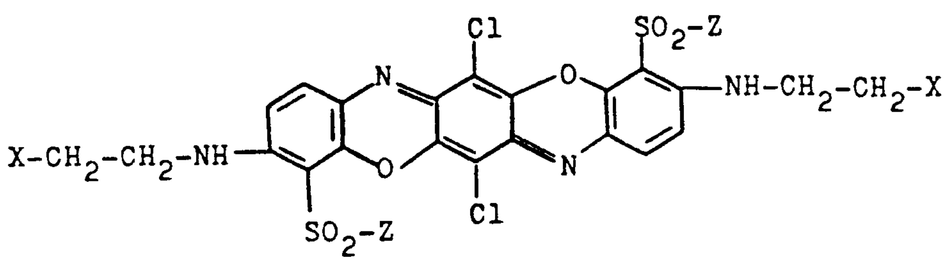

(IV)

und der Farbstoff entsprechend einer allgemeinen Formel (II) ein Farbstoff der Formel (V)

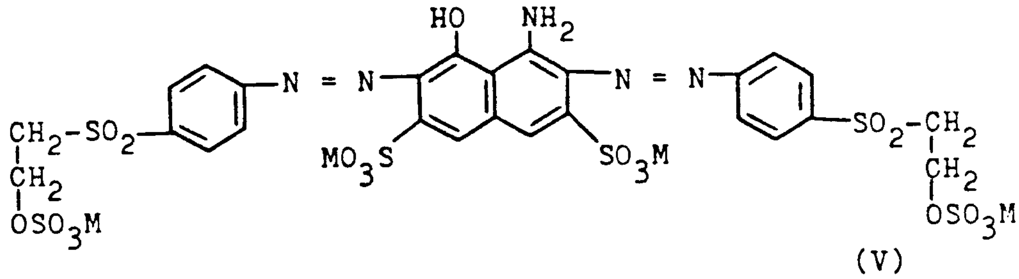

(V)

ist, in welchen M die in Anspruch 1 genannte Bedeutung besitzt, X für die Sulfo- oder Sulfatogruppe steht und Z die β-Sulfatoethyl-Gruppe ist.

**9.** Lösung, bevorzugt wäßrige Lösung einer Zusammensetzung nach einem der Ansprüche 1 bis 8 mit einem Gesamtfarbstoffgehalt der Farbstoffe (I) und (II) von 10 bis 40 Gew.-% und einem pH-Wert zwischen 4 und 7.

**10.** Verwendung der Zusammensetzung nach einem der Ansprüche 1 bis 9 zum Färben von carbonamidgruppenhaltigen oder bevorzugt hydroxygruppenhaltigen Fasermaterialien.

**11.** Verwendung eines oder mehrerer Farbstoffe der in Anspruch 1 genannten und definierten allgemeinen Formeln (I) zusammen mit einem oder mehreren Farbstoffen entsprechend den in Anspruch 1 genannten und definierten allgemeinen Formeln (II) im Mengenverhältnis von 90:10 bis 10:90 Gewichtsteilen bevorzugt von 30:70 bis 60:40 und insbesondere bevorzugt von 30:70 bis 50:50 Gewichtsteilen, zum Färben oder Bedrucken von carbonamidgruppenhaltigen oder bevorzugt hydroxygruppenhaltigen Fasermaterialien.

**12.** Verwendung nach Anspruch 10 oder 11 zum Färben von Cellulosefasermaterialien unter alkalischen Färbebedingungen.

**13.** Verwendung nach Anspruch 10, 11 oder 12 zum Färben von Fasermaterialien, insbesondere Cellulosefasermaterialien, im Ausziehverfahren.

**14.** Verfahren zum Färben oder Bedrucken von carbonamidgruppenhaltigen oder hydroxygruppenhaltigen Fasermaterialien, dadurch gekennzeichnet, daß man eine der in Anspruch 1 genannten und definierten Mischung von Farbstoffen der allgemeinen Formeln (I) und (II) oder einen oder mehrere Farbstoffe entsprechend den allgemeinen Formeln (I) gemeinsam mit einem oder mehreren Farbstoffen entsprechend den allgemeinen Formeln (II) im Mengenverhältnis von 90:10 bis 10:90 Gewichtsteilen in wäßriger Lösung auf das Fasermaterial appliziert und die Farbstoffe mittels Wärme und/oder mittels eines säurebindenden Mittels auf der Faser fixiert.

**Claims**

**1.** A composition of water-soluble fiber-reactive dyes, which contains or essentially consists of one or more dyes conforming to the general formulae (Ia) and (Ib) and one or more dyes conforming to the general formulae (IIa), (IIb), (IIc) and (IId) in a ratio of 90:10 to 10:90 parts by weight of dyes (I) and (II):

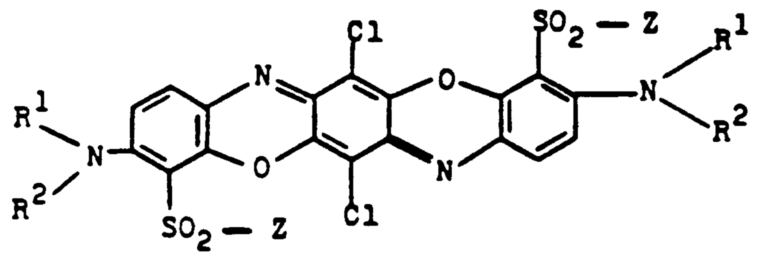

(Ia)

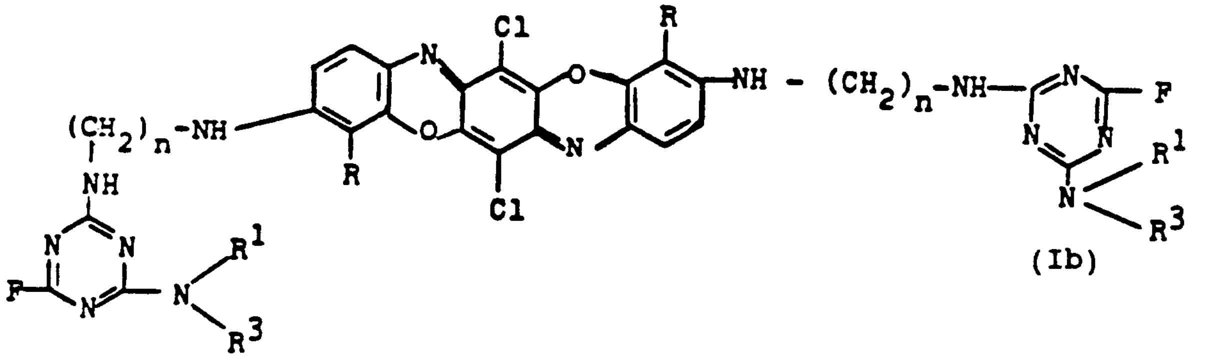

(Ib)

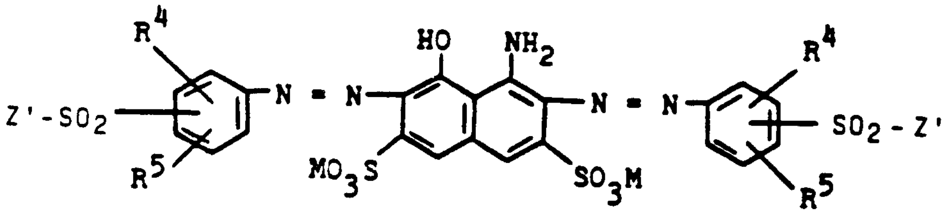
(IIa)

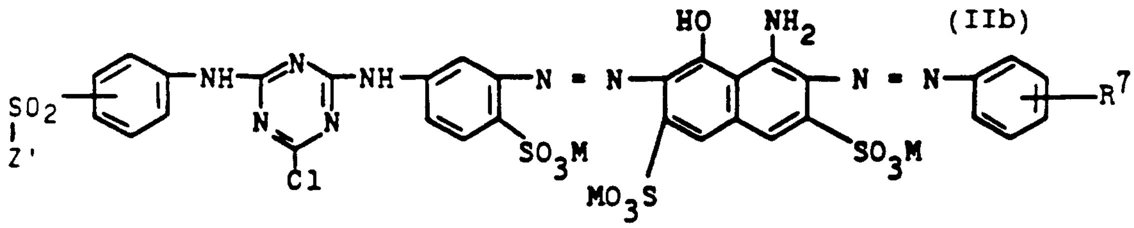
(IIb)

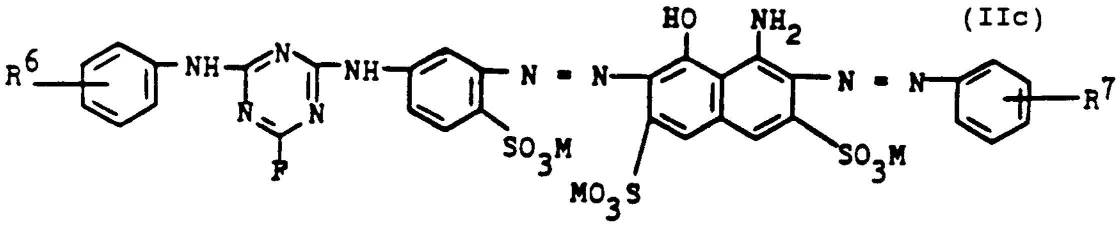
(IIc)

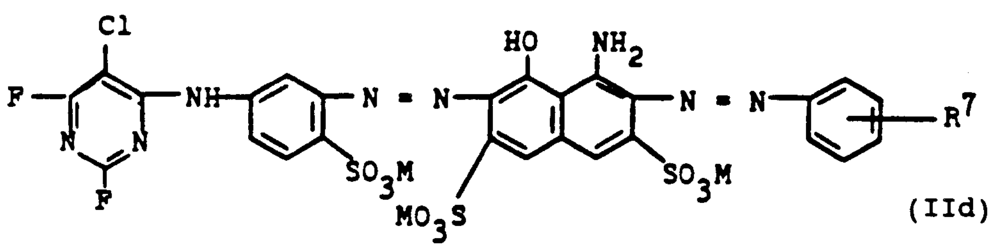
(IId)

in which the individual formula members are identical to or different from one another and

- Z is the vinyl group or the $\beta$-sulfatoethyl group,
- Z' is the vinyl group or the $\beta$-sulfatoethyl group,
- R stands for the sulfo group or a sulfonamide group of the formula (III)

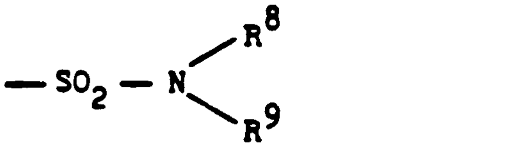
(III)

in which

- $R^8$ is a hydrogen atom or a substituted or unsubstituted alkyl group of 1 to 4 carbon atoms, and
- $R^9$ denotes an alkyl group of 1 to 4 carbon atoms which can be substituted by 1 or 2 substituents from the group sulfato, sulfo, carboxyl and phosphato, or is an aryl group, which

can be substituted by 1, 2 or 3 substituents from the group sulfo and carboxyl, or is an aryl-substituted alkyl group of 1 to 4 carbon atoms which can be substituted in the aryl radical by 1, 2 or 3 substituents from the group sulfo and carboxyl,

$R^1$ is a hydrogen atom or a substituted or unsubstituted alkyl group of 1 to 4 carbon atoms,

$R^2$ is an alkyl group of 1 to 4 carbon atoms which can be substituted by 1 or 2 substituents from the group sulfato, sulfo, carboxyl and phosphato, or is an aryl group, which can be substituted by 1, 2 or 3 substituents from the group sulfo and carboxyl, or is an aryl-substituted alkyl group of 1 to 4 carbon atoms which can be substituted in the aryl radical by 1, 2 or 3 substituents from the group sulfo and carboxyl,

$R^3$ is an alkyl group of 1 to 4 carbon atoms which can be substituted by 1 or 2 substituents from the group sulfato, sulfo, carboxyl and phosphato, or is a phenyl group which is substituted by 1 or 2 substituents from the group sulfo and carboxyl,

$R^4$ is a hydrogen atom or a sulfo group, a carboxyl group, an alkyl group of 1 to 4 carbon atoms, an alkoxy group of 1 to 4 carbon atoms, or a bromine atom,

$R^5$ is a hydrogen atom or a sulfo group, a carboxyl group, an alkyl group of 1 to 4 carbon atoms, an alkoxy group of 1 to 4 carbon atoms, or a bromine atom,

$R^6$ is an alkyl group of 1 to 4 carbon atoms, a hydroxyl group, a carboxyl group, a sulfo group or a chlorine atom,

$R^7$ is a sulfo group, a sulfonamide group conforming to the formula (III) mentioned and defined above or a carboxyl group,

n stands for the number 1, 2 or 3, and

M is a hydrogen atom or an alkali metal.

**2.** The composition as claimed in claim 1 having mixing ratios of the dyes of the formulae (I) and (II) between 30:70 and 60:40 parts by weight.

**3.** The composition as claimed in claim 1 having mixing ratios of the dyes of the formulae (I) and (II) between 30:70 and 50:50 parts by weight.

**4.** The composition as claimed in any one of claims 1 to 3, wherein, in the dyes of the formulae (I) and (II), the formula radicals Z and Z' are each a $\beta$-sulfatoethyl group.

**5.** The composition as claimed in any one of claims 1 to 4, wherein, in the dyes of the formulae (I), $R^1$ denotes a hydrogen atom and R denotes a sulfo group.

**6.** The composition as claimed in any one of claims 1 to 5, wherein, in the dyes of the general formulae (I), $R^2$ stands for a $\beta$-sulfoethyl, $\beta$-sulfatoethyl, $\beta$-sulfatopropyl, carboxymethyl, $\beta$-carboxy-ethyl, $\gamma$-carboxypropyl, monosulfophenyl, monosulfobenzyl or $\beta$-(monosulfophenyl)-ethyl group and $R^3$ denotes the 2,5-disulfophenyl group.

**7.** The composition as claimed in any one of claims 1 to 4, wherein, in the dyes of the formulae (II), $R^4$ and $R^5$ each denote a hydrogen atom, $R^6$ is a chlorine atom in the meta-position relative to the amino group and $R^7$ denotes a sulfo group or a sulfonamide group of the formula (III) which was mentioned in claim 1 and in which $R^8$ stands for a hydrogen atom and $R^9$ has the meaning indicated for formula (III).

**8.** The composition as claimed in any one of claims 1 to 3, wherein the dye conforming to one of the formulae (I) is a dye of the formula (IV)

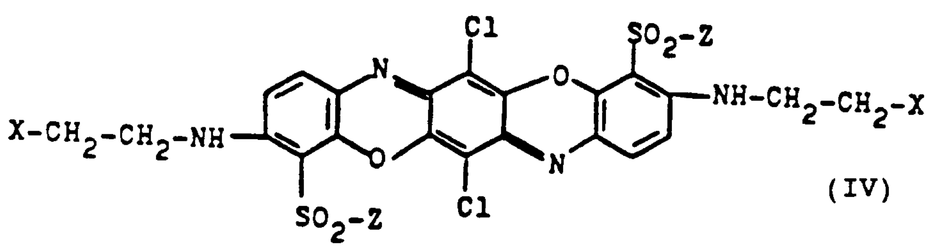

(IV)

and the dye conforming to a formula (II) is a dye of the formula (V)

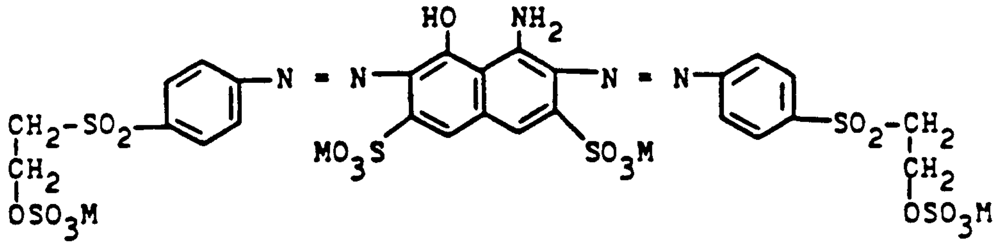

(V)

in which M has the meaning mentioned in claim 1, X stands for the sulfo or sulfato group and Z is the $\beta$-sulfatoethyl group.

**9.** A solution, preferably aqueous, of a composition as claimed in any one of claims 1 to 8 with an overall dye content of the dyes (I) and (II) of 10 to 40% by weight and a pH value between 4 and 7.

**10.** Use of the composition as claimed in any one of claims 1 to 9, for dyeing carboxamido-containing or preferably hydroxyl-containing fiber materials.

**11.** Use of one or more dyes of the formulae (I) mentioned and defined in claim 1 together with one or more dyes conforming to the formulae (II) mentioned and defined in claim 1 in a mixing ratio of 90:10 to 10:90 parts by weight, preferably of 30:70 to 60:40 and particularly preferably of 30:70 to 50:50 parts by weight, for dyeing or printing carboxamido-containing or preferably hydroxyl-containing fiber materials.

**12.** Use as claimed in claim 10 or 11, for dyeing cellulose fiber materials under alkaline dyeing conditions.

**13.** Use as claimed in claim 10, 11 or 12, for dyeing fiber materials, in particular cellulose fiber materials, by the exhaust method.

**14.** A process for dyeing or printing carboxamido-containing or hydroxyl-containing fiber materials, which comprises applying one of the mixtures of dyes of the general formulae (I) and (II) mentioned and defined in claim 1 or one or more dyes conforming to the general formulae (I) together with one or more dyes conforming to the general formulae (II) in a mixing ratio of 90:10 to 10:90 parts by weight in aqueous solution to the fiber material and fixing the dyes on the fiber by means of heat and/or by means of an acid-binding agent.

**Revendications**

**1.** Composition de colorants hydrosolubles pouvant réagir avec les fibres (colorants réactifs), caractérisée en ce qu'elle contient 1 ou plusieurs colorants répondant aux formules générales (Ia) et (Ib) et un ou plusieurs colorants répondant aux formules générales (IIa) , (IIb), (IIc), et (IId), selon un rapport de 90:10 à 10:90 en poids des colorants (I) et (II) ou qu'elle consiste essentiellement en ces colorants :

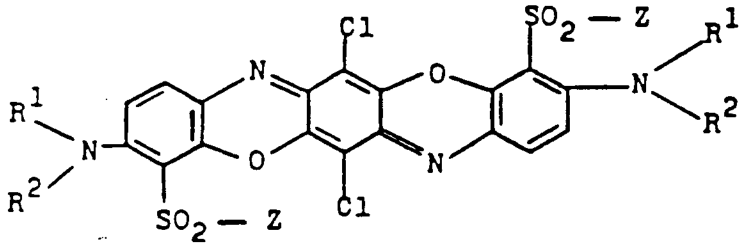

(Ia)

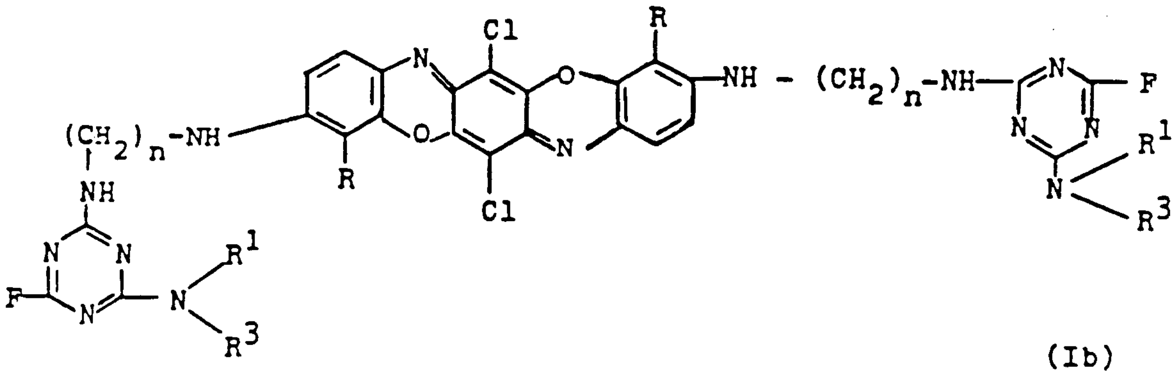

(Ib)

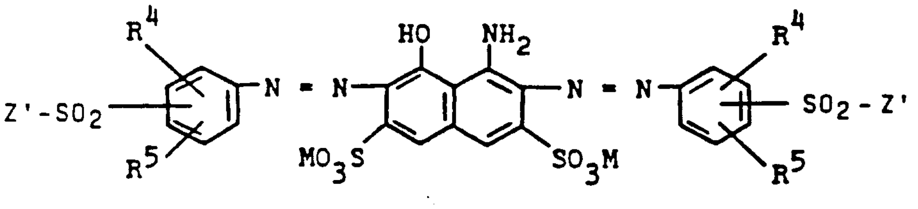

(IIa)

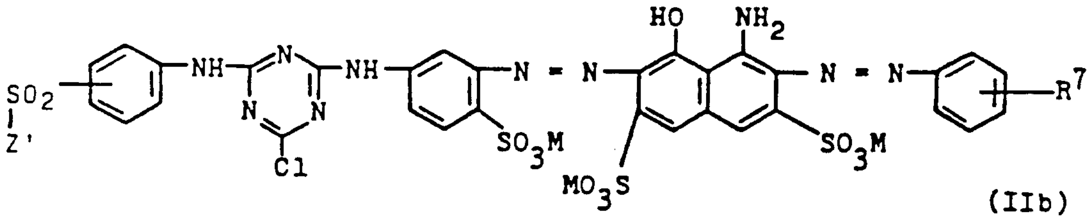

(IIb)

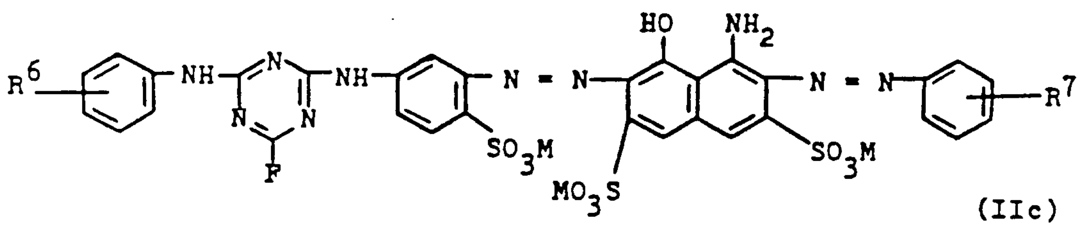

(IIc)

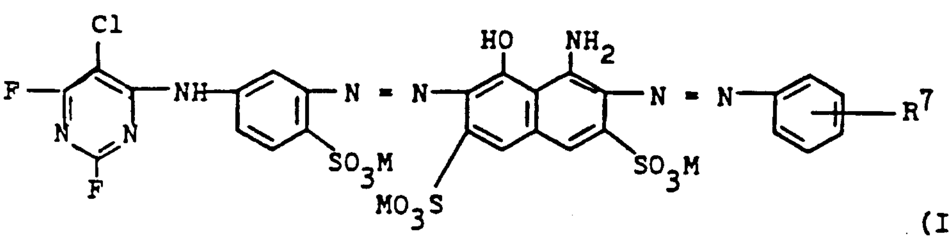

(IId)

formules dans lesquelles les divers termes possèdent des sens identiques ou différents l'un de l'autre et,

- Z représente le groupe vinyle ou le groupe $\beta$-sulfatoéthyle,
- Z' représente le groupe vinyle ou le groupe $\beta$-sulfatoéthyle,
- R représente le groupe sulfo ou un groupe sulfonamide de formule générale (III),

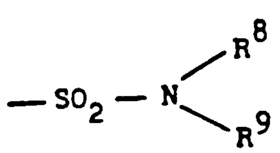

(III)

dans laquelle,

- $R^8$ représente un atome d'hydrogène ou un groupe alkyle ayant 1 à 4 atomes de carbone et qui est éventuellement substitué , et
- $R^9$ représente un groupe alkyle ayant 1 à 4 atomes de carbone , qui peut être substitué par 1 ou 2 substituants choisis parmi un groupe sulfato,sulfo, carboxy et phosphato, ou $R^9$ représente un groupe aryle, qui peut être substitué par 1, 2 ou 3 substituants choisis parmi un groupe

sulfo et un groupe carboxy, ou bien $R^9$ représente un groupe alkyle ayant 1 à 4 atomes de carbone et qui est substitué par un groupe aryle et peut contenir dans le reste aryle 1, 2, 3 substituants choisis parmi un groupe sulfo et un groupe carboxy ,

$R^1$ représente un atome d'hydrogène ou un groupe alkyle ayant 1 à 4 atomes de carbone et qui est éventuellement substitué,

$R^2$ représente un groupe alkyle ayant 1 à 4 atomes de carbone , qui peut être substitué par 1 ou 2 substituants choisis parmi un groupe sulfato, sulfo, carboxy et phosphato, ou bien $R^2$ représente un groupe aryle qui peut être substitué par 1, 2 ou 3 substituants choisis par un groupe sulfo et un groupe carboxy, ou bien $R^2$ représente un groupe alkyle ayant 1 à 4 atomes de carbone , substitué par un groupe aryle et qui peut comporter dans le reste aryle 1, 2 ou 3 substituants choisis parmi un groupe sulfo et un groupe carboxy.

$R^3$ représente un groupe alkyle ayant 1 à 4 atomes de carbone, qui peut être substitué par 1 ou 2 substituants choisis parmi un groupe sulfato, sulfo, carboxy et phosphato, ou bien $R^3$ représente un groupe phényle substitué par 1 ou 2 substituants choisis parmi un groupe sulfo et un groupe carboxy,

$R^4$ représente un atome d'hydrogène ou un groupe sulfo, un groupe carboxy, un groupe alkyle ayant 1 à 4 atomes de carbone, un groupe alcoxy ayant 1 à 4 atomes de carbone ou un atome de brome,

$R^5$ représente un atome d'hydrogène, un groupe sulfo, un groupe carboxy, un groupe alkyle ayant 1 à 4 atomes de carbone , un groupe alcoxy ayant 1 à 4 atomes de carbone ou un atome de brome,

$R^6$ représente un groupe alkyle ayant 1 à 4 atomes de carbone, un groupe hydroxy, un groupe carboxy, un groupe sulfo ou un atome de chlore,

$R^7$ représente un groupe sulfo, un groupe sulfonamide répondant à la formule générale (III) précitée et définie ci-dessus ou un groupe carboxy,

n est un nombre valent 1, 2 ou 3, et

M représente un atome d'hydrogène ou un métal alcalin.

**2.** Composition selon la revendication 1, présentant, entre les colorants répondant aux formules générales (I) et (II), des rapports compris entre 30:70 et 60:40 parties en poids.

**3.** Composition selon la revendication 1, présentant, entre les colorants répondant aux formules générales (I) et (II), des rapports compris entre 30:70 et 50:50 parties en poids.

**4.** Composition selon l'une des revendications 1 à 3, caractérisée en ce que, dans les colorants répondant aux formules générales (I) et (II), les restes Z et Z' représentent chacun un groupe $\beta$-sulfatoéthyle.

**5.** Composition selon l'une des revendications 1 à 4, caractérisée en ce que, dans les colorants de formules générales (I), $R^1$ représente un atome d'hydrogène et R représente un groupe sulfo.

**6.** Composition selon l'une des revendications 1 à 5, caractérisée en ce que, dans les colorants répondant aux formules générales (1), $R^2$ représente un groupe $\beta$-sulfoéthyle, $\beta$-sulfatoéthyle, $\beta$-sulfatopropyle, carboxyméthyle, $\beta$-carboxéthyle, $\gamma$-carboxypropyle, monosulfophényle, monosulfobenzyle ou $\beta$-(monosulfophényl)-éthyle et $R^3$ représente le groupe 2,5-disulfophényle.

**7.** Composition selon l'une des revendications 1 à 4, caractérisée en ce que, dans les colorants répondant aux formules générales (II) $R^4$ et $R^5$ représentent chacun un atome d'hydrogène, $R^6$ est un atome de chlore en position méta par rapport au groupe amino et $R^7$ représente un groupe sulfo ou un groupe sulfonamide et ayant la formule générale (III) citée à la revendication 1, dans laquelle $R^8$ représente un atome d'hydrogène et $R^9$ a le sens indiqué pour la formule (III).

**8.** Composition selon l'une des revendications 1 à 3, caractérisée en ce que le colorant répondant à l'une des formules générales (I) est un colorant de formule générale (IV) :

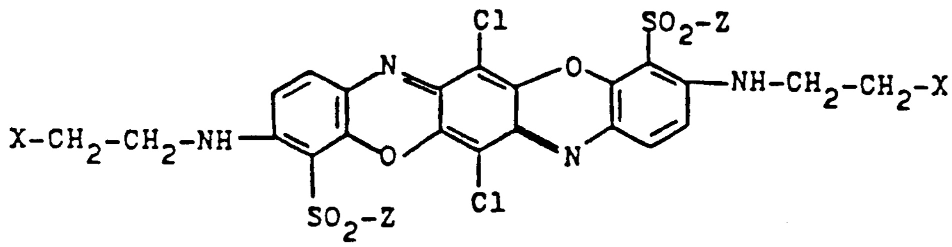

(IV)

et le colorant répondant à l'une des formules générales (II) est un colorant de formule V,

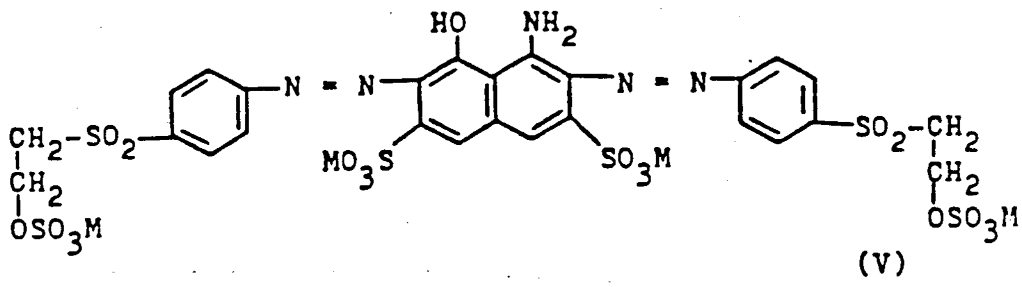

(V)

formules dans lesquelles M a le sens indiqué à la revendication 1, X représente le groupe sulfo ou sulfato, et Z représente le groupe $\beta$-sulfatoéthyle.

**9.** Solution , de préférence solution aqueuse d'une composition selon l'une des revendications 1 à 8, présentant une teneur totale en les colorants (I) et (II) de 10 à 40 % en poids et ayant un pH compris entre 4 et 7.

**10.** Utilisation de la composition selon l'une des revendications 1 à 9 pour teindre des matières fibreuses contenant des groupes carboxamides ou de préférence contenant des groupes hydroxy.

**11.** Utilisation d'un ou plusieurs colorants répondant aux formules générales (I) , citées et définies à la revendication 1, avec 1 ou plusieurs colorants répondant aux formules générales (II) , citées et définies à la revendication 1, selon des rapports pondéraux de 90:10 à 10:90 parties en poids, de préférence de 30:70 à 60:40 que et de façon particulièrement préférée de 30:70 à 50:50 parties en poids, pour teindre ou imprimer des matières fibreuses contenant des groupes carboxamides ou, de préférence, contenant des groupes hydroxy.

**12.** Utilisation selon la revendication 10 ou 11 pour teindre des matières en fibres cellulosiques dans des conditions alcalines de teinture.

**13.** Utilisation selon la revendication 10, 11 ou 12 pour teindre des matières fibreuses, en particulier des matières en fibres cellulosiques, par un procédé par épuisement.

**14.** Procédé pour teindre ou imprimer des matières fibreuses contenant des groupes carboxamides ou contenant des groupes hydroxy, procédé caractérisée en ce qu'on applique en solution aqueuse sur la matière fibreuse un mélange, cité et défini à la revendication 1, de colorants répondant aux formules générales (I) et (II) ou un ou plusieurs colorants répondant aux formules générales (I) avec un ou plusieurs colorants répondant aux formules générales (II), selon des rapports pondéraux de 90:10 à 10:90, et l'on fixe les colorants, à l'aide de la chaleur et/ou à l'aide d'un agent de fixation des acides, sur les fibres.